Europäisches Patentamt

(19) European Patent Office

Office européen des brevets

(11) Publication number : **0 510 980 A2**

# (12) EUROPEAN PATENT APPLICATION

(21) Application number : **92303668.5**

(22) Date of filing : **23.04.92**

(51) Int. Cl.⁵ : **F16H 21/20**

(30) Priority : **25.04.91 US 694511**

(43) Date of publication of application :
**28.10.92 Bulletin 92/44**

(84) Designated Contracting States :
**DE FR GB IT NL SE**

(71) Applicant : **E.I. DU PONT DE NEMOURS AND COMPANY**
**1007 Market Street**
**Wilmington Delaware 19898 (US)**

(72) Inventor : **Aikens, Paul Wayne**
**321 Valley Road**
**Etters, Pennsylvania 17319 (US)**
Inventor : **Jenkins, Richard Samuel**
**416 Manor Drive, Fox Lee Manor**
**Kennett Square, Pennsylvania 19348 (US)**
Inventor : **Strong, James Dale**
**301 Skeet Avenue**
**Bear, Delaware 19701 (US)**

(74) Representative : **Barnard, Eric Edward et al**
**BROOKES & MARTIN High Holborn House**
**52/54 High Holborn**
**London WC1V 6SE (GB)**

(54) **Automatic variable stroke crank assembly.**

(57)   An automatic variable stroke crank assembly serves to pivot or oscillate wire treatment apparatus, such as, for forming features on an elongated metal wire and, in particular, for making features, such as pin tips, compliant sections and retention sections, on electrical terminal pins for use in interconnecting electrical leads, plated through holes in printed circuit boards and/or connector contacts. The assembly is composed of a spherical bearing assembly (602) with a spherical bearing (614) linked to the apparatus, and a crank assembly (604). The crank assembly has a crank shaft (626) carrying a disk (628) with a pin (630) engaged in a passage (618) in the spherical bearing. The spherical bearing is movable along the crank pin so that as the crank shaft is rotated, the spherical bearing can be selectively located to drive or not to drive the apparatus.

FIG.20A

FIG.20B

EP 0 510 980 A2

## BACKGROUND OF THE INVENTION

### 1. Field of the Invention.

This invention relates to an automatic variable stroke crank assembly for pivoting or oscillating an apparatus, such as, for forming features on an elongated metal wire and, in particular, for making features, such as pin tips, compliant sections and retention sections, on electrical terminal pins for use in interconnecting electrical leads, plated through holes in printed circuit boards and/or connector contacts.

### 2. Description of Related Art.

It is well known in the connector art to use electrical pins to interconnect electrical leads, plated through holes in printed circuit boards and/or connector contacts. Such pins typically have square or round cross sections perpendicular to their longitudinal axes.

The pins are made from an electrically conductive material, such as copper, brass, phosphor bronze, beryllium copper or the like. It is further known to plate or coat the pins with a conductive layer, such as tin, nickel, palladium, gold, silver or a suitable alloy. Pins are plated in order to apply a layer on a pin core that does not oxidize as much as the material of the core. Less oxidation at an electrical connection improves electrical performance. Pins are made with a core material different than the plating material in order to reduce the cost of the pin and/or to make the pin more rigid than if the pin was entirely made out of the plating material.

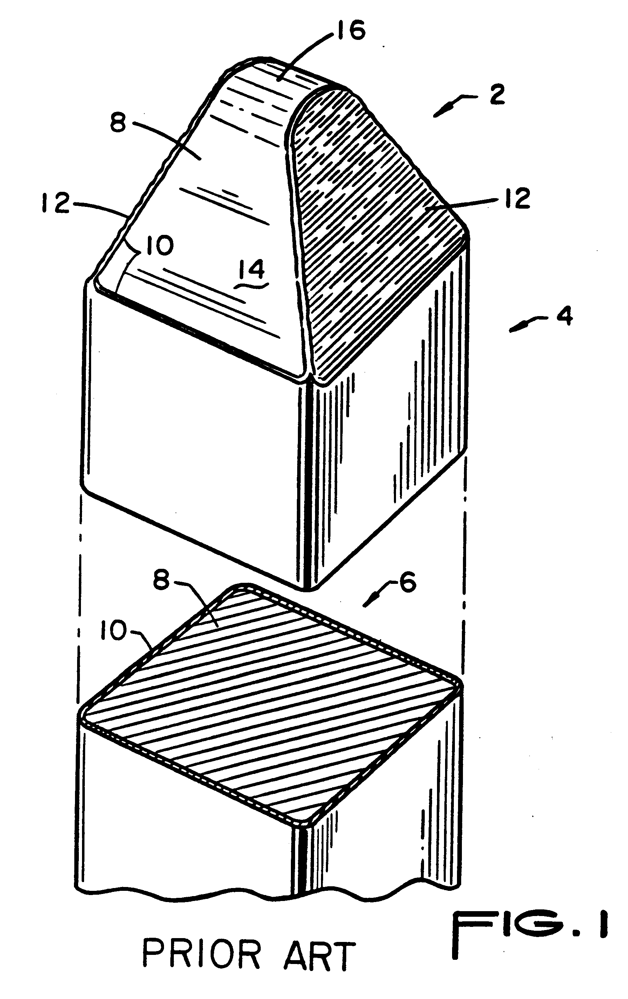

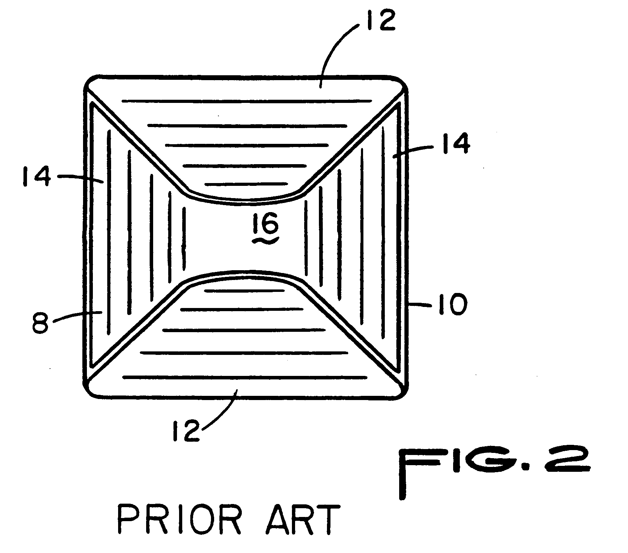

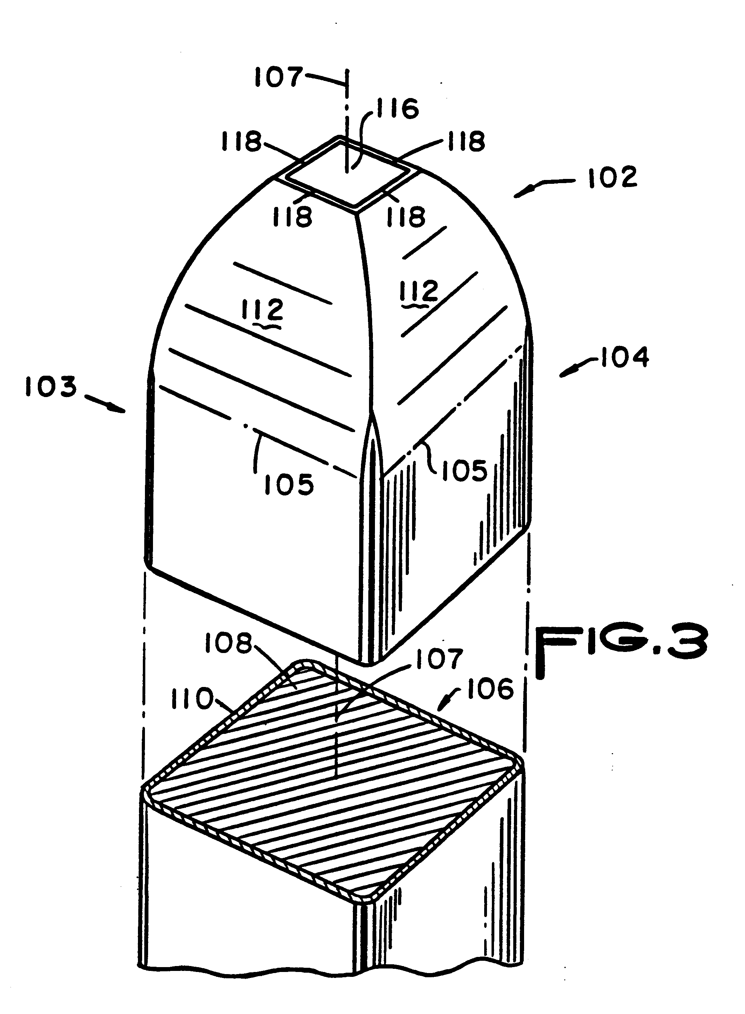

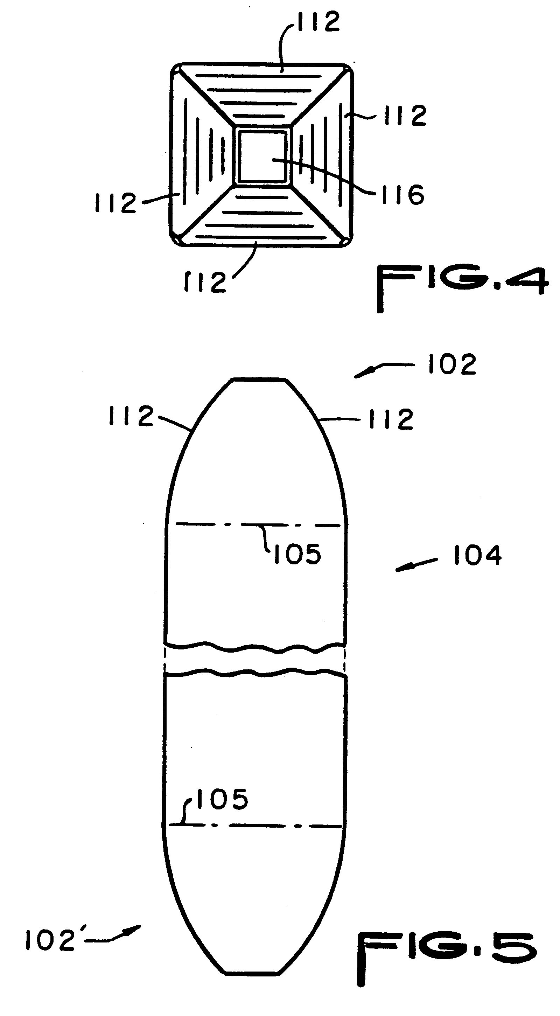

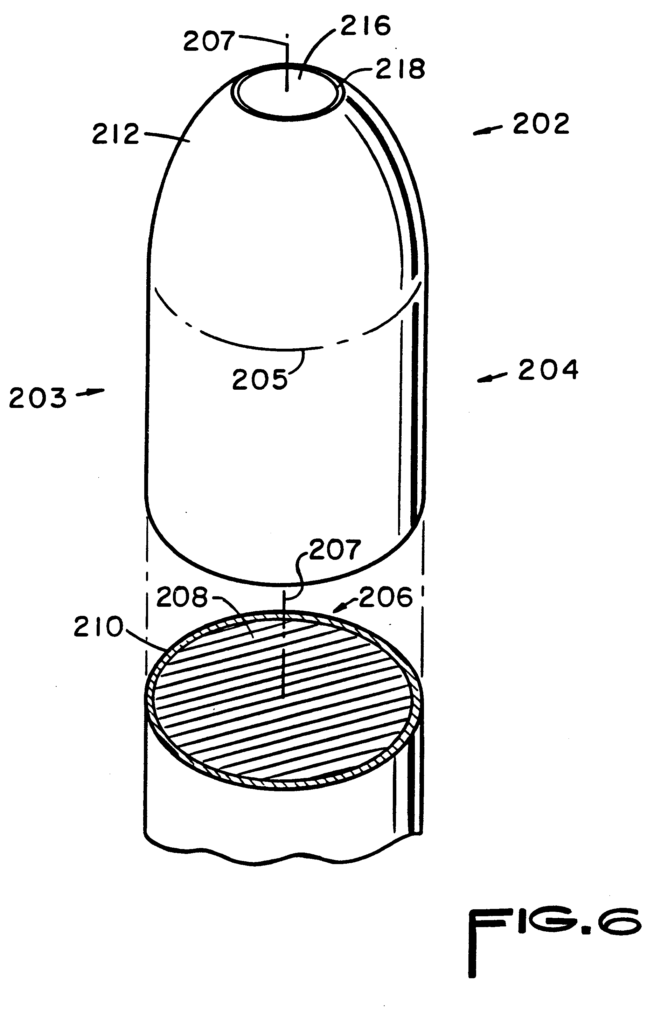

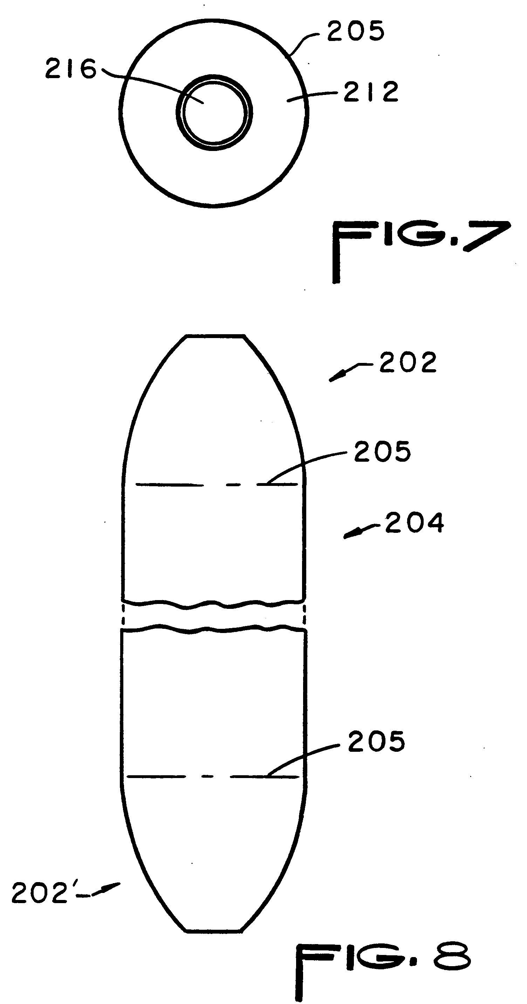

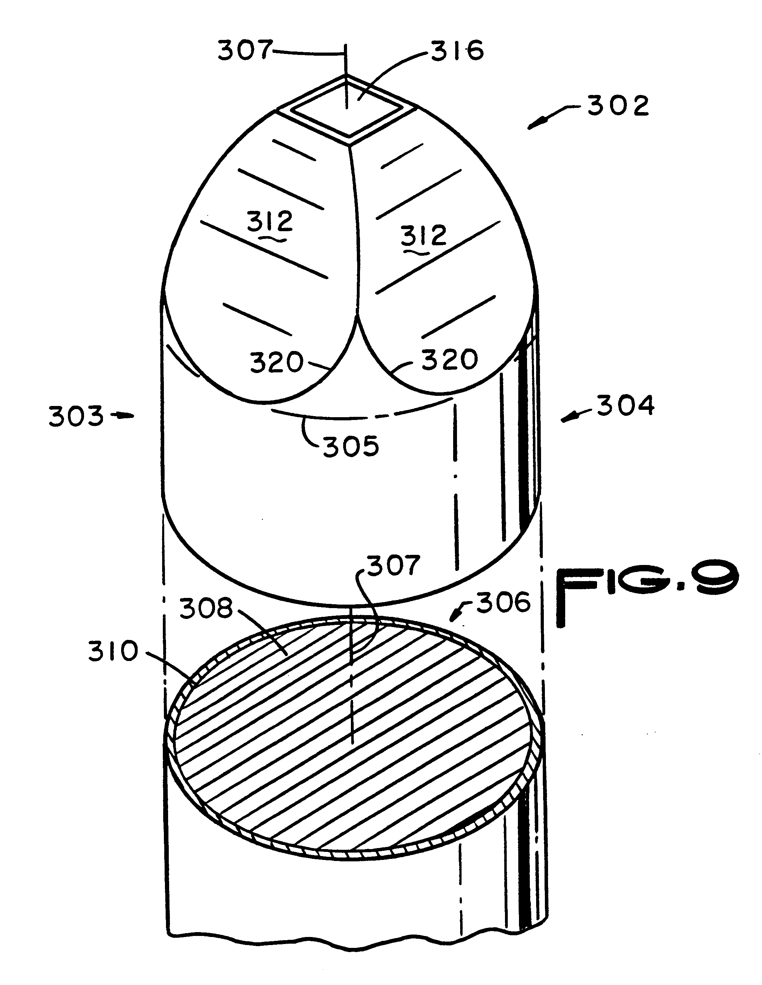

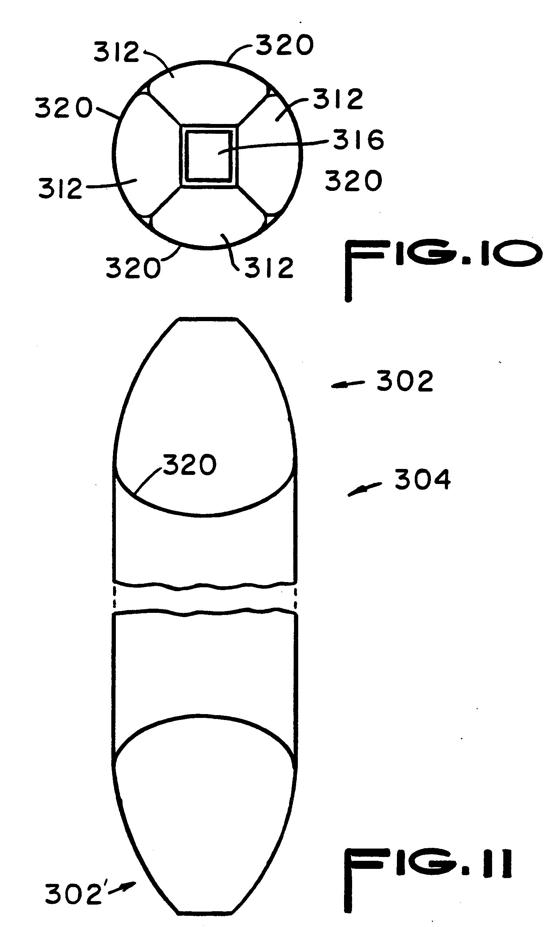

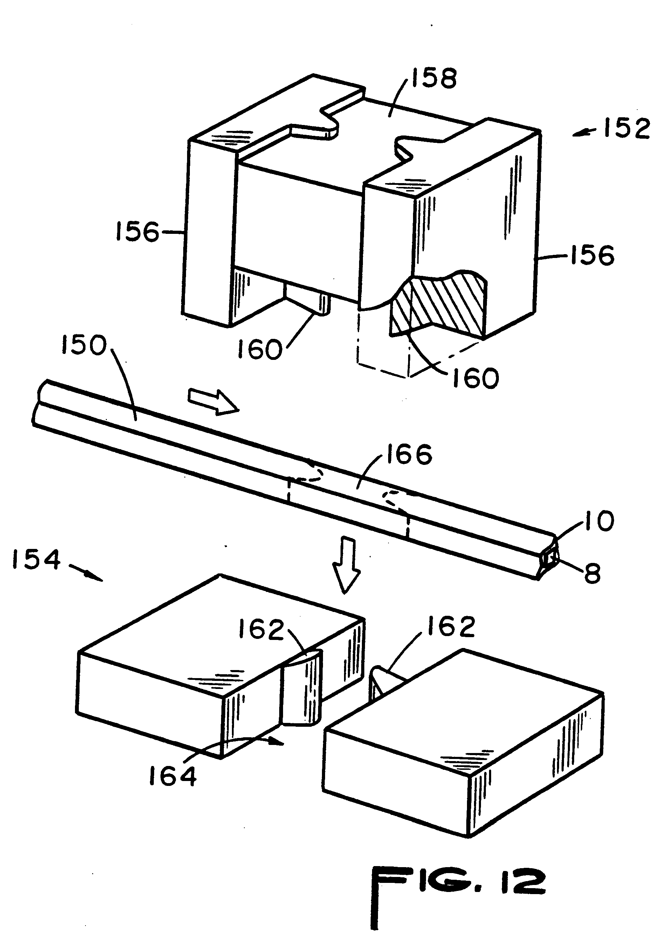

It is well known in the art to make pin tips with flat tapered sides to facilitate alignment with and/or insertion into a plated through hole or a mating contact. For instance, Figure 1 shows an enlarged perspective view of an electrical terminal pin tip 2 of a prior art electrical terminal pin 4 with a portion broken away to show a cross section 6 of the pin 4. The pin 4 comprises an electrically conductive inner core 8 plated with an electrically conductive outer layer 10. Figure 2 is an end view of the prior art electrical pin tip 2 of Figure 1.

Referring to Figures 1 and 2, the pin tip 2 has a pair of opposed flat swaged plated sides 12 that taper or slope towards a longitudinal axis of the pin 4 as the pin 4 approaches its longitudinal end. The pin tip 2 further has a pair of opposed flat trimmed non-plated sides 14 that taper or slope towards the longitudinal axis of the pin 4 as the pin 4 approaches its longitudinal end. The opposed flat trimmed non-plated sides 14 are Jointed at the longitudinal end by a trimmed non-plated curved or cylindrical surface 16. When this tip 2 is inserted into a plated through hole or a female contact, the plated through hole or the female contact can slide against the non-plated tapered sides 14 causing some of the core material to be transferred onto the plated through hole or the female contact. Multiple insertions and withdrawals of the pin 4 into plated through holes or mating female contacts increase the probability of rubbing some of the core material off the non-plated sides 14 onto the plated through holes or mating female contacts. This transferred core material can ultimately be dragged or positioned between the pin plating 10 and the plated through hole or the female contact. Depending on the materials used for the core 8 and the plating or layer 10, this may increase the oxidation rate of the connection between the pin 4 and the plated through hole or the female contact, compared to a connection directly between pin plating 10 and the plated through hole or the female contact.

Other pin tips are shaped by trimming which removes plating material from trimmed sides. Then one or more additional process step is performed to plate the trimmed sides. Although this ensures that all exterior sides and surfaces of the pin tip are plated, it adds time and cost to the manufacturing process.

It is typical to simultaneously insert a plurality of pins, such as, mounted in a connector housing, into a mating set of plated through holes or female terminals. The insertion force required increases with the number of pins being inserted and can be significant. Tapered flat sides on pin tips reduce the insertion force required. However, it is desirable to further reduce the longitudinal insertion force without reducing the lateral retention force applied on the pin by the plated through holes or female terminals.

It is desirable to provide an automatic variable stroke crank assembly for pivoting or oscillating an apparatus, such as, for making features, such as pin tips, on electrical terminal pins that satisfy the above described needs and overcomes the above described disadvantages of the prior art.

## SUMMARY OF THE INVENTION

The present invention is directed to a variable stroke crank assembly for pivoting or oscillating an apparatus comprising a spherical bearing assembly, a crank assembly, rotating means and moving means. The spherical bearing assembly includes a bearing support, a link and a spherical bearing. The link has a first end connected to the support and a second end connectable to the apparatus. The spherical bearing is rotatably mounted in the support. The spherical bearing has a passage entirely through its center. The crank assembly includes a crank shaft, a disk and a pin. The crank assembly is rotatable about a crank shaft longitudinal axis. The disk is connected to the crank shaft. The pin is connected to the disk radially spaced from the crank shaft. The pin passes through the spherical bearing passage and has a pin longitudinal axis which intersects the shaft longitudinal axis at a home position. The rotating means is for rotating the crank shaft. The moving means is for moving the spherical bearing along the crank pin from and to the home position. When the link second end is connected to the apparatus, the spherical bearing is at the home position and the crank shaft is rotated, the link substantially does not move the apparatus. When the link second end is connected to the apparatus, the spherical bearing is on the pin and spaced from the home position and the crank shaft is rotated, the pin rotates the spherical bearing about the shaft longitudinal axis which moves the link and pivots or oscillates the apparatus.

The invention also provides apparatus for forming a feature on an elongated metal wire which incorporates the variable stroke crank assembly for operating the apparatus, means for feeding the wire to and through the apparatus and means for automatically controlling the rotating means, the moving means and the feeding means, whereby the apparatus forms the feature on the elongated metal wire at various locations along the wire.

BRIEF DESCRIPTION OF THE DRAWINGS

The invention can be more fully understood from the following detailed description thereof in connection with the accompanying drawings described as follows.

Figure 1 is an enlarged perspective view of an electrical terminal pin tip of a prior art electrical terminal pin with a portion broken away to show a cross-section of the pin.

Figure 2 is an end view of the prior art electrical pin tip of Figure 1.

Figure 3 is an enlarged perspective view of a first embodiment of an electrical terminal pin tip on an end portion of an electrical terminal pin with a portion broken away to show a cross-section of the pin in accordance with the present invention.

Figure 4 is an end view of the electrical terminal pin tip of Figure 3.

Figure 5 is a side view of the electrical terminal pin having a pair of the electrical pin tips of Figures 3 and 4.

Figure 6 is an enlarged perspective view of a second embodiment of an electrical terminal pin tip on an end portion of an electrical terminal pin with a portion broken away to show a cross-section of the pin in accordance with the present invention.

Figure 7 is an end view of the electrical terminal pin tip of Figure 6.

Figure 8 is a side view of an electrical terminal pin having a pair of the electrical pin tips of Figures 6 and 7.

Figure 9 is an enlarged perspective view of a third embodiment of an electrical terminal pin tip on an end portion of an electrical terminal pin with a portion broken away to show a cross section of the pin in accordance with the present invention.

Figure 10 is an end view of the electrical terminal pin tip of Figure 9.

Figure 11 is a side view of an electrical terminal pin having a pair of the electrical pin tips of Figures 9 and 10.

Figure 12 schematically illustrates a process of manufacturing the electrical pin tip of Figures 1 and 2.

Figure 13 is a perspective view of a multi-swat apparatus in accordance with the present invention.

Figure 14 is an exploded perspective view of the multi-swat apparatus of Figure 13.

Figure 15A is a front view of the multi-swat apparatus of Figure 13 assembled in a first manner and illustrated in a home position.

Figure 15B is a front view of the multi-swat apparatus of Figure 13 assembled in the first manner and illustrated in a first forming position.

Figure 15C is a front view of the multi-swat apparatus of Figure 13 assembled in the first manner and illustrated in a second forming position.

Figures 16A-16G schematically illustrate steps in a process of making a pair of the electrical pin tips of Figures 3-5 in accordance with the present invention.

Figure 17A is a front view of the multi-swat apparatus of Figure 13 assembled in a second manner and illustrated in a dome position.

Figure 17B is a front view of the multi-swat apparatus of Figure 13 assembled in the second manner and illustrated in a first forming position.

Figure 17C is a front view of the multi-swat apparatus of Figure 13 assembled in the second manner and illustrated in a second forming position.

Figure 18A is an enlarged perspective view of working ends of forming tools for forming a pair of the pin tips illustrated in Figures 6-8 connected end to end in a preplated wire.

Figure 18B is an enlarged perspective view of working ends of forming tools for forming a pair of the pin tips illustrated in Figures 9-11 connected end to end in a preplated wire.

Figure 18C is an enlarged perspective view of working ends of forming tools for forming a bowtie compliant section in a preplated wire.

Figure 18D is an enlarged perspective view of working ends of forming tools for forming a star retention section in a preplated wire.

Figure 19 is a schematic illustration of a first embodiment of an automatic variable stroke crank assembly in accordance with the present invention for operating the multi-swat apparatus of Figure 13.

Figure 20A is an enlarged view of part of the automatic variable stroke crank assembly of Figure 19 illustrated in a non-stroke position.

Figure 20B is an enlarged view of the part of the automatic variable stroke crank assembly of Figure 20A illustrated in a stroke position.

Figure 21A is a schematic illustration of a second embodiment of part of an automatic variable stroke crank assembly in accordance with the present invention for operating the multi-swat crank apparatus of Figure 13 illustrated in a non-stroke position.

Figure 21B is an enlarged exploded view of the part of the automatic variable stroke crank assembly of Figure 21A.

Figure 22 is a schematic illustration of a control system for the automatic variable stroke crank assembly of Figure 19.

## DESCRIPTION OF THE PREFERRED EMBODIMENT(s)

Throughout the following detailed description, similar reference characters refer to similar elements in all figures of the drawings.

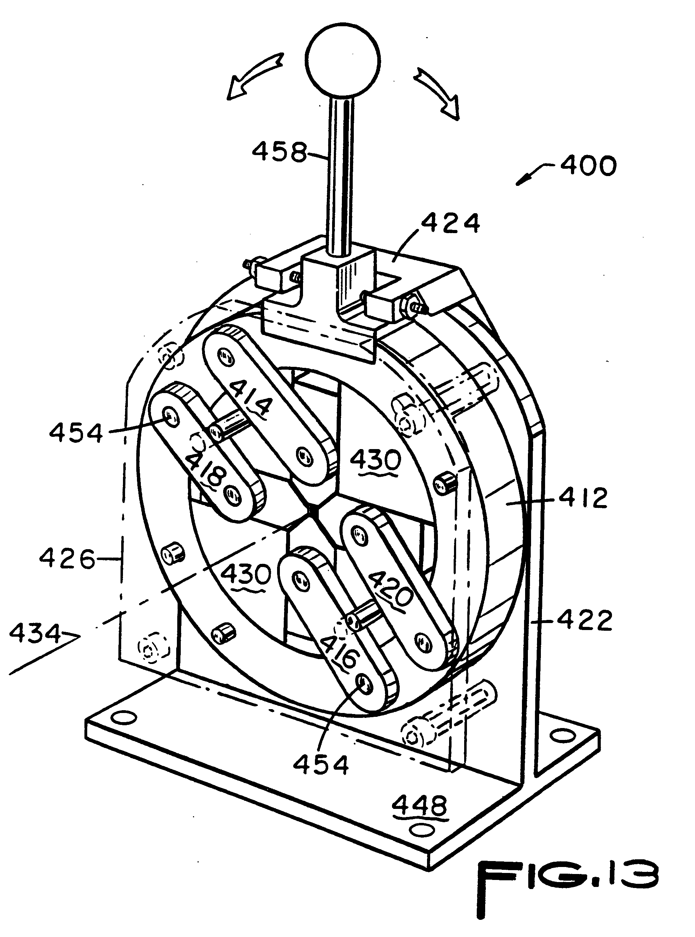

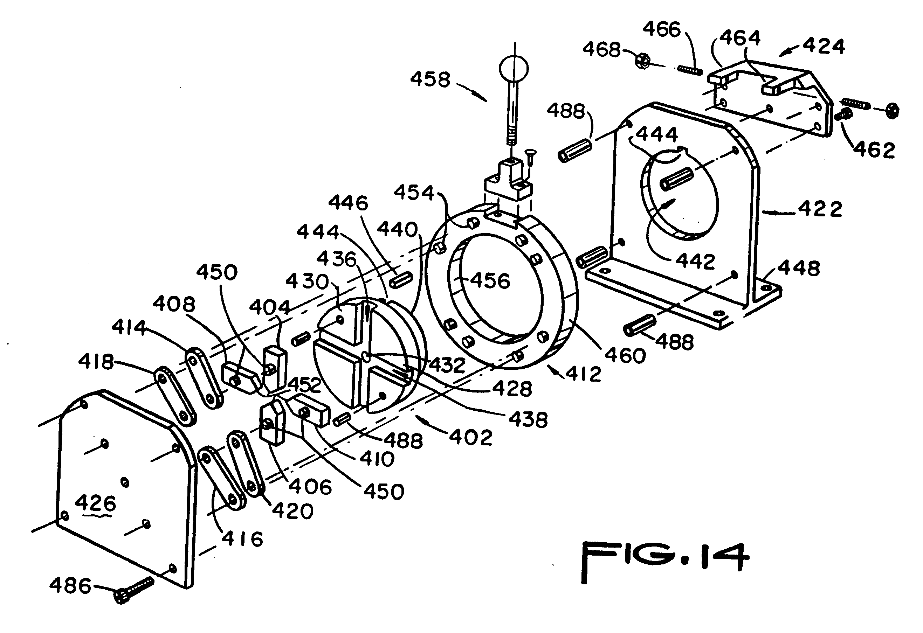

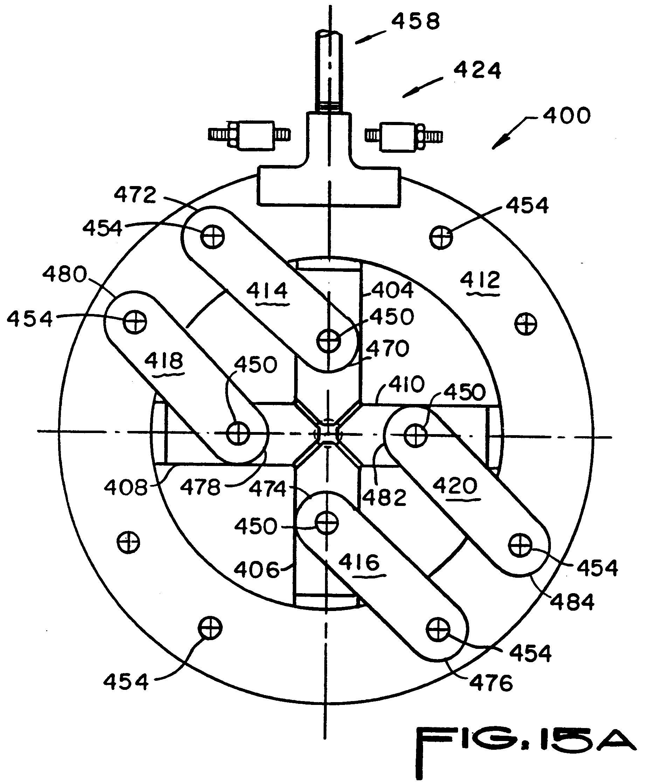

Referring to Figure 3, there is illustrated an enlarged perspective view of a first embodiment of an electrical terminal pin tip 102 in accordance with the present invention. The pin tip 102 is on an end portion 103 of an electrical terminal pin 104 with a portion broken away to show a cross section 106 of the pin 104. The electrical terminal pin 104 is for inserting tip first into and electrically connecting to an electrical female terminal or a plated-through hole of a printed circuit board. Figure 4 is a end view of the electrical terminal pin tip 102 of Figure 3. Figure 5 is a side view of the electrical terminal pin 104 having a pair of the electrical pin tips 102,102' of Figures 3 and 4.

Referring to Figures 3-5, the electrical terminal pin 104 comprises an electrically conductive core 108 and a conductive layer 110. The conductive layer 110 is plated on a perimeter of the core 108 at least near or immediately adjacent an end of the pin 104. The pin 104, the core 108 and the plating or layer 110 are symmetric about a longitudinal axis 107 of symmetry.

The pin tip 102 comprises a non-plated substantially flat end 116 of the core 108 and at least one curved side 112 substantially plated with the conductive layer 110. Preferably, the non-plated substantially flat end 116 is substantially perpendicular to the axis 107 of symmetry. Further, the non-plated substantially flat end 116 has at least one edge 118. In the embodiment illustrated in Figures 3-5, the non-plated substantially flat end 116 is substantially square with four edges 118. Since there is one curved side 112 corresponding to each edge 118, there are four curved sides 112. Each one of the curved sides 112 extends from a corresponding one of the substantially flat end edges 118 away from the longitudinal axis 107 to a perimeter 105 of the pin 104 near or immediately adjacent the pin tip 102. Preferably, the curved sides 112 are shaped substantially alike. The conductive layer 110 entirely covers each one of the curved sides 112 at least from the pin circumference 105 to half way along the side 112 to the non-plated flat end 116.

Preferably, each one of the curved sides 112 is a convex portion of a corresponding cylinder. It is also preferred that the plated curved sides 112 intersect the pin perimeter 105 at an angle tangent to the corresponding cylinder.

The pin 104 may further comprise a second pin tip 102' on another end of the pin 104 distal to the first tip 102. The second tip 102' can be a mirror image of the first tip 102. In other words, the second tip 102' can have the same shape as the first tip 102 but it can be rotated 180 degrees. Alternatively, the second pin tip 102' can be configured like any other tip described herein or elsewhere.

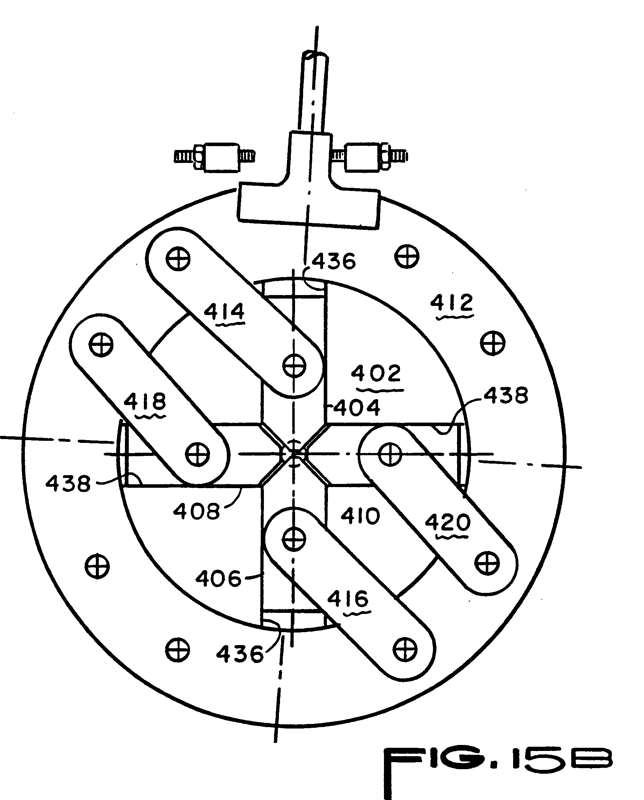

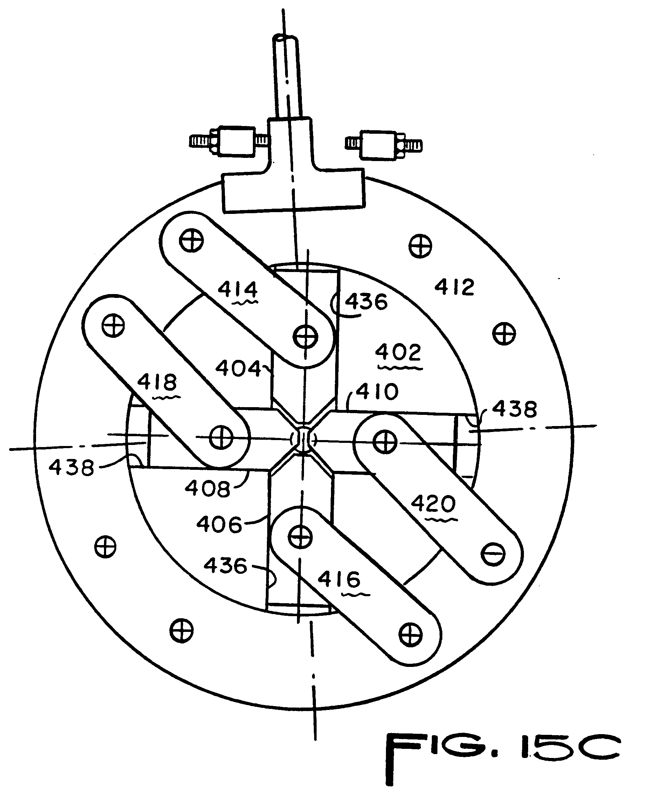

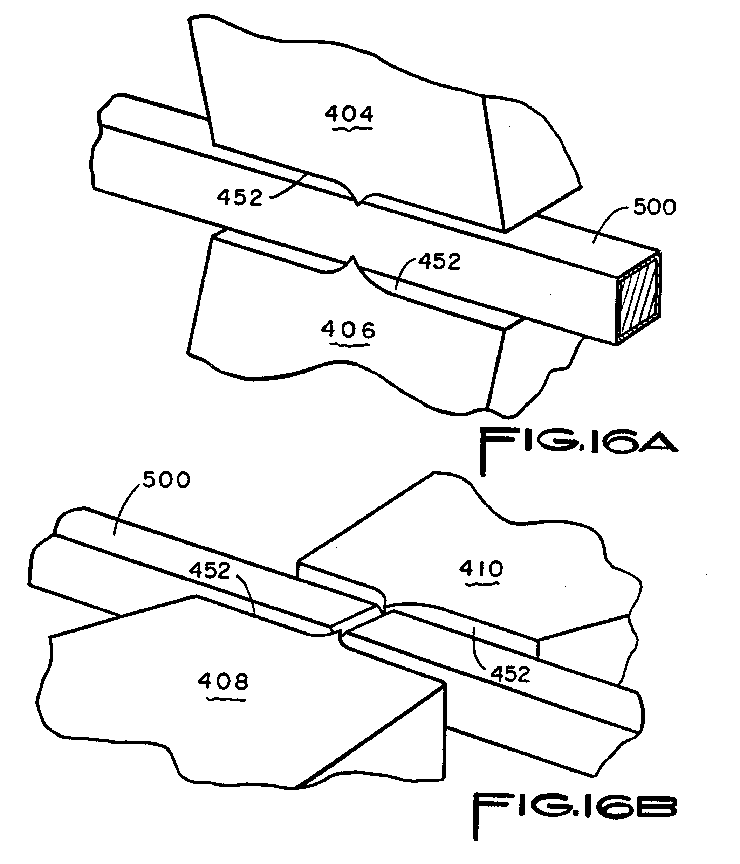

Figure 6 is an enlarged perspective view of a second embodiment of an electrical terminal pin tip 202 on an end portion 203 of an electrical terminal pin 204 with a portion broken away to show a circular cross section 206 of the pin 204 in accordance with the present invention. Figure 7 is an end view of the electrical terminal pin tip 202 of Figure 6. Figure 8 is a side view of an electrical terminal pin 204 having a pair of the electrical pin tips 202,202' of Figures 6 and 7.

The second electrical terminal pin tip 202 is the same as the first electrical terminal pin tip 102, except the second electrical terminal pin tip 202 has a non-plated substantially flat end 216 which is substantially circular with only one circular edge 218. Further, it has only one curved side 212. The side 212 is convex and comprises a truncated sphere or ellipsoid. The second electrical terminal pin end portion 203 has a pin circumference 205 near or immediately adjacent the pin tip 202 that is substantially circular.

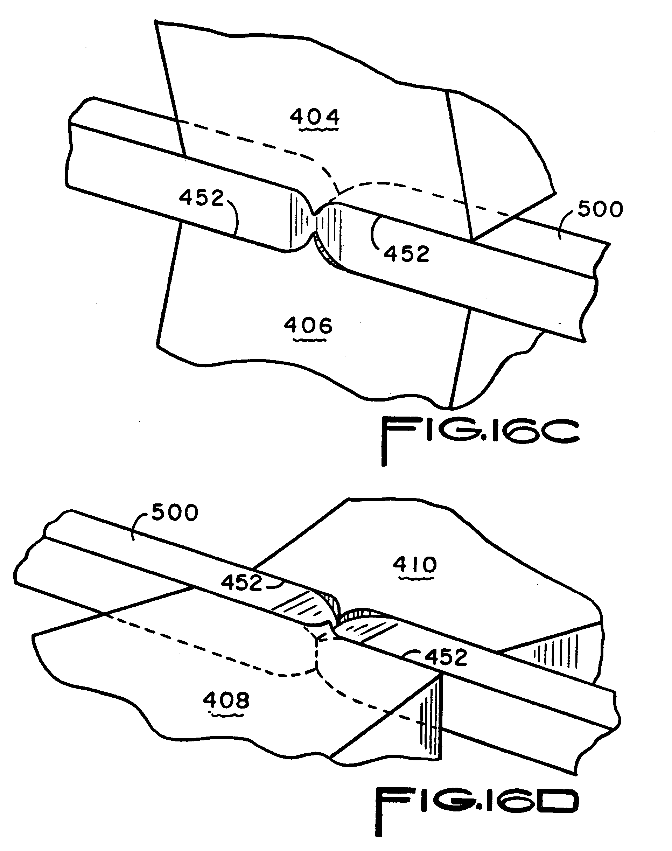

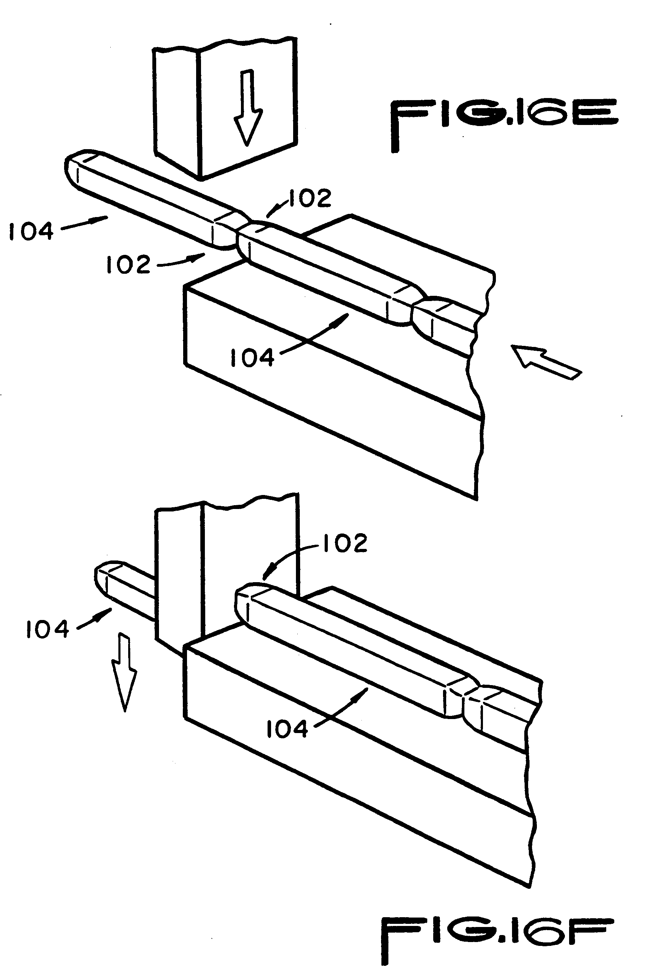

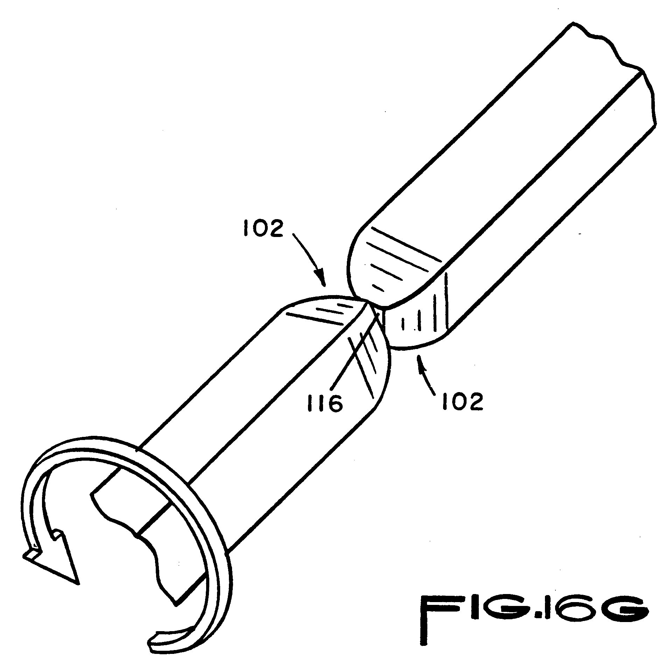

Figure 9 is an enlarged perspective view of a third embodiment of an electrical terminal pin tip 302 on an end portion 303 of an electrical terminal pin 304 with a portion broken away to show a cross section 306 of the pin 304 in accordance with the present invention. Figure 10 is an end view of the electrical terminal pin tip 302 of Figure 9. Figure 11 is a side view of the electrical terminal pin 304 having a pair of the electrical pin tips 302,302' of Figures 9 and 10.

The third electrical terminal pin 304 has a first pin tip 302 connected to an electrical terminal pin end portion 303. The first pin tip 302 is the same as the first pin tip 102 illustrated in Figures 3-5, except where the first pin tip 302 joins the end portion 303. The pin end portion 303 is the same as the pin end portion 203 illustrated in Figures 6 and 8, except where the pin end portion 303 joins the pin tip 302. The electrical terminal pin tip 302 has a non-plated substantially flat end 316 which is substantially square. The electrical terminal pin tip 302 has four convex sides 312. The electrical terminal pin portion 303 has a pin perimeter 305 near or immediately adjacent the pin tip 302 that is substantially circular. The plated four convex sides 312 intersect the circular pin perimeter 305 at arced edges 320. Each end of the arced edges 320 intersects with an end of an adjacent one of the arced edges 320.

The electrical terminal pins 104,204,304 of the present invention can be made from any suitable metal used for electrical terminals, such as brass, phosphor bronze, beryllium copper and the like. The electrical terminal pins 104,204,304 may be plated or coated with any conductive layer 110,210,310, such as tin, nickel, palladium, gold, silver or a suitable alloy.

The electrical terminal pins 104,204,304 of the present invention can be made from a plated wire. The wire can be swaged around its circumference forming a pair of the pin tips 102,202,302 at the same time connected together at their flat ends 116,216,316. Adjacent pins can be separated by applying opposing lateral forces on the pins or by twisting one with respect to the other.

The first, second and third electrical terminal pin tips 102,202,302, respectively, of the present invention have a greater mechanical advantage than the prior art tip 2 illustrated in Figures 1 and 2. This is the case because the slope of the sides 112,212,312 progressively decreases from the flat end 116,216,316 to the ends or arcs 320 of the sides 112,212,312 intersecting the circumference 105,205,305. Thus, when the tip 102,202,302 is almost entirely inserted in the plated through hole or the mating female terminal, the slope of the side(s) 112,212,312 is providing a reduced longitudinal opposing force than the prior art pin 4 when the prior art pin 4 is inserted the same distance in the plated through hole or the mating female terminal. In other words, the longitudinal insertion force required to insert a pin with the first pin tip 102, the second pin tip 202 or the third pin tip 302, tip first into, for instance, a plated through hole or a mating female terminal, is less than the longitudinal insertion force required to insert the pin 4 illustrated in Figures 1 and 2 tip first. Further, the lateral retention force applied on the first pin 104, the second pin 204 or the third pin 304 by a plated through hole or a mating female terminal is the same or substantially the same as the lateral retention force applied on the pin 4 illustrated in Figures 1 and 2.

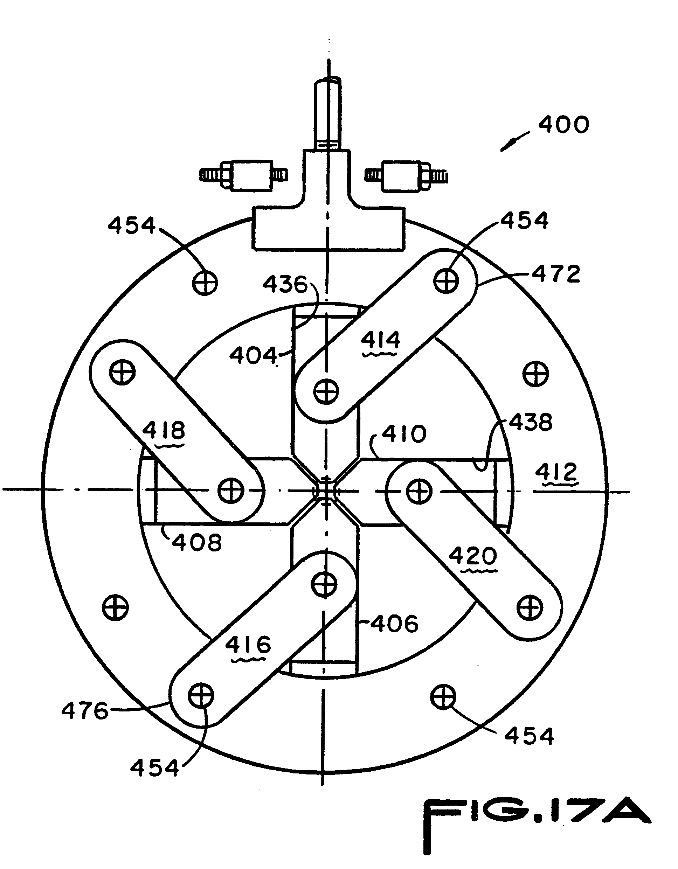

One method and associated apparatus for making the prior art pin 4 (illustrated in Figures 1 and 2) is schematically illustrated in Figure 12. A preplated wire 150 comprising the core 8 plated with the layer 10 is fed to a forming position between a punch assembly 152 and a die assembly 154. The punch assembly 152 comprises a pair of opposed swage punches 156 spaced apart by a trim punch 158. The swage punches 156 have punch projections 160 with inclined surfaces for pressing against one (such as a top) surface of the wire 150. The die assembly 154 also has a pair of die projections 162 with inclined surfaces for pressing against another (such as a bottom) surface of the wire 150. In a stamping, swaging or coining action, the wire 150 is swatted or compressed between the punch assembly 152 and the die assembly 154. The punch projections 160 and the die projections 162 contact the top and bottom surfaces of the wire 150 forming the plated sides 12 of a pair of pin tips 2. Then in the same punch stroke, the trim punch 158 slides down with respect to the swage punches 156 into a space 164 between the die projections 162 of the die assembly 154 forming the trimmed sides 14 and the trimmed curved end surface 16 completing the forming of the pair of the pin tips 2. In this process, for each pair of tips 2 formed, a segment 166 of the wire 150 positioned between the material from which the tips 2 are formed is discarded as waste or further processed to separate and recover the core 8 and plating 10 materials for reuse. It is desirable to make pin tips in a process where there is no wire segment discarded as waste or further processed or recycled to recover raw materials.

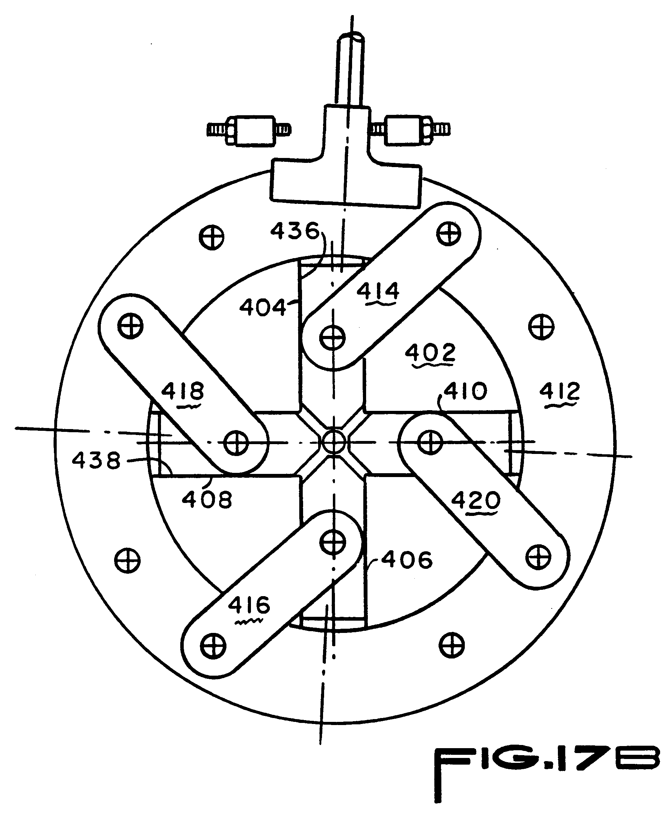

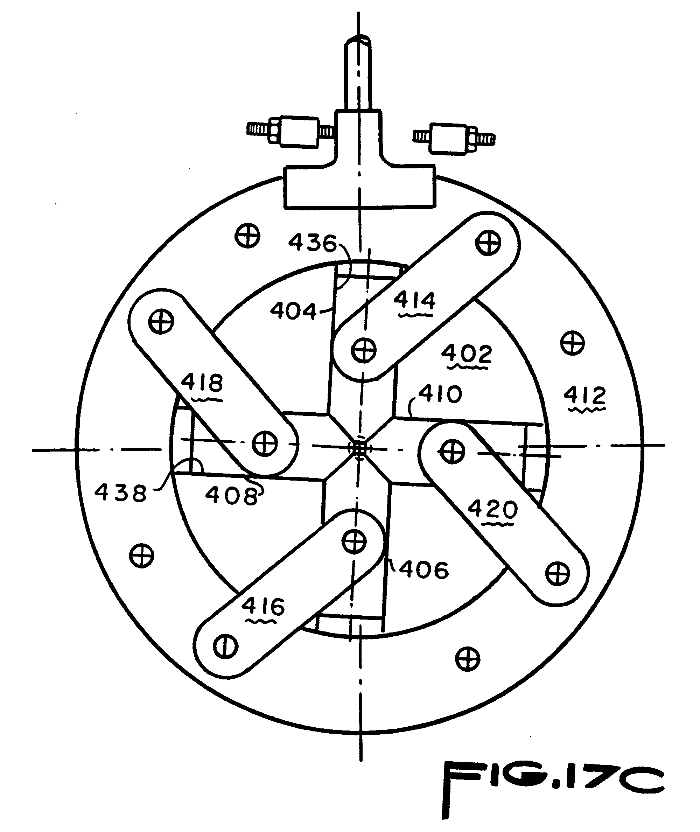

As such, the present invention is directed to methods and apparatus for making electrical terminal pins, such as pins 104,204,304, where there is no wire segment discarded as waste or further processed or recycled to recover raw materials. Referring to Figure 13, there is a perspective view of a multi-swat apparatus 400 for forming a feature on an elongated preplated metal wire in accordance with the present invention. Figure 14 is an exploded perspective view of the multi-swat apparatus 400 of Figure 13. The multi-swat apparatus 400 can be used to perform a stamping, coining or swaging operation on an elongated metal wire to form the feature, such as a pair of the pin tips 102,202,302 illustrated in Figures 3-5, 6-8 or 9-11, respectively.

The multi-swat apparatus 400 comprises a tool guide 402, a first forming tool 404, a second forming tool 406, a third forming tool 408, a fourth forming tool 410, a ring 412, a first link 414, a second link 416, a third link 418, and a fourth link 420. Optionally, the multi-swat apparatus 400 may also comprise a support 422, a stop assembly 424, and a cover shield 426.

The tool guide 402 has a first surface 428, a second surface 430 and a passage 432. The first surface 428 is cylindrical about an axis 434. The second surface 430 is connected to one end of the cylindrical surface 428. The second surface 430 has a first straight slot 436 and a second straight slot 438 recessed in the second surface 430 and intersecting one another at the axis 434. The passage 432 extends through the tool guide 402 along the axis 434. The tool guide 402 further has a cylindrical hub 440 for insertion in a mating circular hole 442 through the support 422. The hub 440 and the support 422 have mating key slots 444 for receiving a key 446 to prevent rotation of the hub 440 with respect to the support 422.

Alternatively, the support 422 can be integral or one piece with the tool guide 402. The support 422 can have a T-flange 448 for mounting the support 422 to another structure, such as a table.

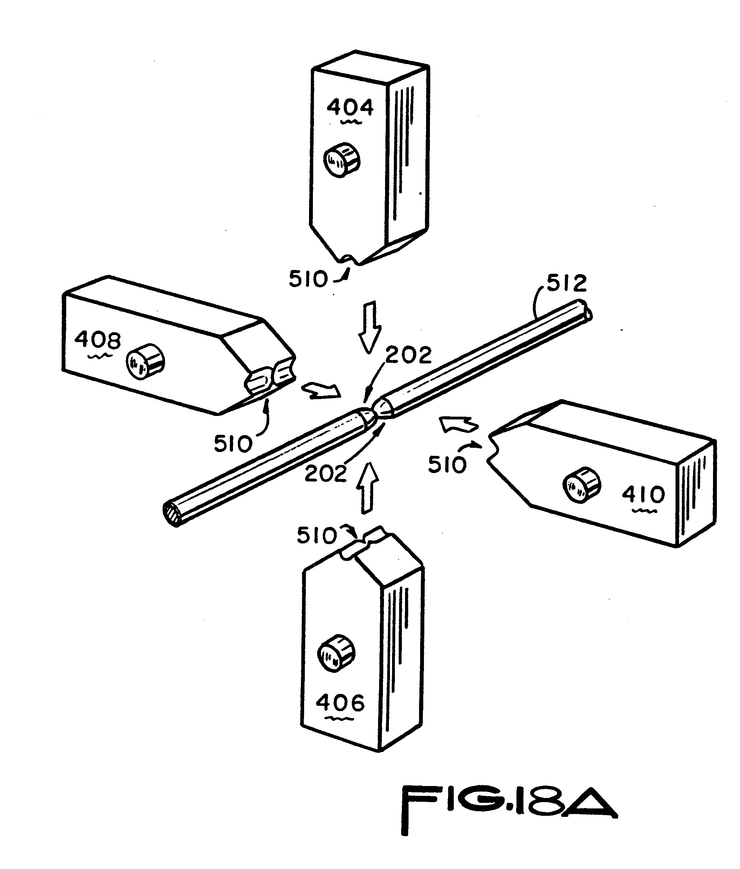

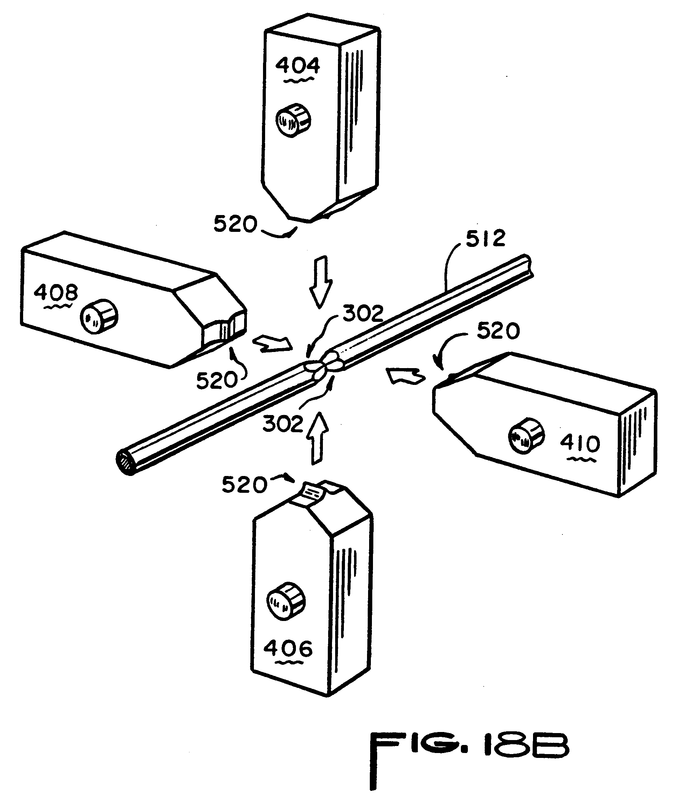

The first forming tool 404 and the second forming tool 406 are pivotally or slideably positioned in the first slot 436 across the axis 434 from one another. The third forming tool 408 and the fourth forming tool 410 are pivotally or slideably positioned in the second slot 438 across the axis 434 from one another. Each one of the first, second, third and fourth forming tools 404,406,408,410 have a projection or pin 450 extending away from the tool guide 402. Each one of the first, second, third and fourth forming tools 404,406,408,410 further have a working end 452 for contacting the wire and conforming the contacted wire to the shape of the working end 452. The working ends 452 illustrated in Figure 16A through Figure 16D are configured as a mold for forming a pair of the pin tips 102 illustrated in Figures 3-5 connected end to end at their non-plated substantially flat ends 116.

The ring 412 has a plurality of projections or pins 454 and an inner cylindrical surface 456 for contacting the tool guide cylindrical surface 428. The ring 412 is capable of oscillating around the axis 434 with respect to the tool guide 402 by sliding on the cylindrical guide surface 428.

An extension, pin or lever assembly 458 can be on, connected to or one piece with the ring 412. The extension 458 can, for instance, extend radially from an outer cylindrical surface 460 of the ring 412. Force can be applied to the extension 458 to oscillate the ring 412 with respect to the tool guide 402.

The stop assembly 424 may comprise a bracket for mounting to the support 422, such as, by screws 462. The bracket has legs 464 extending on distal sides of the ring extension 458. The legs 464 have inner surfaces or stops that can function to limit movement or the ring extension 458 to the space between the stops. Threaded shafts or screws 466 can threadedly extend through the legs 464 to provide adjustably positionable stops. Nuts 468 can fix the threaded shafts or screws 466 in place against the legs 464.

Referring to Figure 15A, the first link 414 has a first end 470 and a second end 472. The first end 470 is pivotally connected to the-first tool projection 450. Specifically, the first end 470 has a circular hole through it and the first tool projection 450 extends through the first end hole. The second end 472 is pivotally connected to a first one of a first set of four of the ring projections 454. Specifically, the second end 472 has a circular hole through it and the first one of a first set of the ring projections 454 extends through the second end hole.

The second link 416 has a first end 474 and a second end 476. The first end 474 is pivotally connected to the second tool projection 450. Specifically, the first end 474 has a circular hole through it and the second tool projection 450 extends through the first end hole. The second end 476 is pivotally connected to a second one of the first set of the ring projections 454. Specifically, the second end 476 has a circular hole through it and the second one of the first set of the ring projections 454 extends through the second end hole.

The third link 418 has a first end 478 and a second end 480. The first end 478 is pivotally connected to the third tool projection 450. Specifically, the first end 478 has a circular hole through it and the third tool projection 450 extends through the first end hole. The second end 480 is pivotally connected to a third one of the first set of the ring projections 454. Specifically, the second end 480 has a circular hole through it and the third one of the first set of the ring projections 454 extends through the second end hole.

The fourth link 420 has a first end 482 and a second end 484. The first end 482 is pivotally connected to the fourth tool projection 450. Specifically, the first end 482 has a circular hole through it and the fourth tool projection 450 extends through the first end hole. The second end 484 is pivotally connected to a fourth one of the first set of the ring projections 454. Specifically, the second end 484 has a circular hole through it and the fourth one of the first set of the ring projections 454 extends through the second end hole.

The cover shield 426 can be positioned adjacent the links 414,416,418,420. Screws 486 can connect the cover shield 426 to the support 422 and the tool guide 402 with the ring 412, the forming tools 404,406,408,410 and the links 414,416,418,420 sandwiched between the cover shield 426 and the support 422. Spacers 488 can be provided on the screws 486 between the cover shield 426 and the support 422 or the tool guide 402.

The operation of the above described multi-swat apparatus 400 is illustrated in the first manner or configuration in Figures 15A, 15B and 15C. Figure 15A is a front view of the multi-swat apparatus 400 of Figure 13 assembled in a first manner or configuration as described above and illustrated in a home position. In the home position, the forming tools 404,406,408,410 are positioned mid-way between their closest position to the axis 434 and their farthest position from the axis 434. In the home position, a preplated wire can be positioned in the passage 432 such that the wire extends out of the slots 436,438.

Figure 15B is a front view of the multi-swat apparatus 400 of Figure 13 assembled in the first manner and illustrated in a first forming position. As illustrated in Figure 15B, the ring 412 is oscillated or rotated from the home position in a first direction (clockwise in Figure 15B) with respect to the tool guide 402. This causes the first and second forming tools 404,406 to be forced by the links 414,416 to slide in the first slot 436 towards the axis 434 into contact with a first pair of distal sides of the wire. This further causes the third and fourth forming tools 408,410 to be forced by the links 418,420 to slide in the second slot 438 away from the axis 434.

Figure 15C is a front view of the multi-swat apparatus 400 of Figure 13 assembled in the first manner and illustrated in a second forming position. As illustrated in Figure 15B, when the ring 412 is oscillated or rotated from the first forming position or the home position in a second direction (opposite to the first direction) with respect to the tool guide 402, the third and fourth forming tools 408,410 are forced by the links 418,420 to slide in the second slot 438 towards the axis 434 into contact with a second pair of distal sides of the wire. At the same time, the first and second forming tools 404,406 are forced by the links 414,416 to slide in the first slot 436 away from the axis 434.

As seen in Figures 15A, 15B and 15C, longitudinal axis of the links 414,416,418,420 are parallel or substantially parallel in the home position, the first forming position and the second forming position when the the multi-swat apparatus 400 is in the first configuration.

Figures 16A-16G schematically illustrate steps in a process for forming a feature on an elongated metal wire 500 where the feature is a pair of the electrical pin tips 102 of Figures 3-5.

Figure 16A illustrates a first step of simultaneously stamping a first pair of distal sides of the wire 150 between the working end 452 of the first forming tool 404 and the working end 452 of the second forming tool 406 such that the working ends 452 press into the first pair of the distal sides a first distance.

Figure 16B illustrates a step of simultaneously stamping a second pair of distal sides of the wire 500 between the working end 452 of the third forming tool 408 and the working end 452 of the fourth forming tool 410 such that the working ends 452 press into the second pair of the distal sides a second distance.

Figure 16C illustrates a step of simultaneously stamping the first pair of the distal sides of the wire 500 between the working end 452 of the first forming tool 404 and the working end 452 of the second forming tool 406 such that the working ends 452 press into the first pair of the distal sides a third distance.

Figure 16D illustrates a step of simultaneously stamping the second pair of distal sides of the wire 500 between the working end 452 of the third forming tool 408 and the working end 452 of the fourth forming tool 410 such that the working ends 452 press into the second pair of the distal sides a fourth distance forming the feature in the sides of the metal wire 500.

Preferably, the first and second distances are the same or substantially the same. Preferably, the third and fourth distances are the same or substantially the same. Further preferably, the third and fourth distances are greater than the first and second distances.

One or more additional stamping steps can be performed on the wire 500 where the distances that the forming tools 404,406,408,410 press into the sides of the wire 500 increases each time a pair or all the wire sides are stamped. For instance, after the stamping step illustrated in Figure 16D, another step of simultaneously stamping can be performed where the first pair of the distal sides of the wire is stamped by and between the working end 452 of the first forming tool 404 and the working end 452 of the second forming tool 406 such that the working ends 452 press into the first pair of the distal sides a fifth distance which is greater than the fourth distance. Then the second pair of distal sides of the wire 500 can be stamped by and between the working end 452 of the third forming tool 408 and the working end 452 of the fourth forming tool 410 such that the working ends 452 press into the second pair of the distal sides the fifth distance.

In addition or alternatively, one or more additional stamping steps can be performed on the wire 500 between stamps at different working end distances such that the distances that the forming tools 404,406,408,410 press into the sides of the wire 500 remains the same as an immediately preceding stamping step each time a pair or all the sides are stamped. For instance, the third and fourth stamping steps can be repeated one or more times to provide a smoother surface on the feature. In any event, after all the wire sides have been stamped once with the forming tools 404,406,408,410 pressing their greatest distance into the wire sides, it is preferred that all of the sides be stamped one or more additional times with the forming tools 404.406,408,410 pressing their greatest distance into the wire sides. Repetitious stamping by the forming tools 404,406,408,410 at the same distance makes the surface of the wire feature being formed smoother.

Figures 16E and 16F illustrate a further optional step of applying a force substantially perpendicular to the axis of symmetry near one of the pin tips 102 with respect to the other one of the pin tips 102 to shear the pin tips 102 apart forming the non-plated substantially flat ends of two pin tips 102. Figure 16G illustrates an alternative way of separating the connected pin tips 102. Specifically, Figure 16G illustrates the step of rotating one of the pin tips 102 about the axis of symmetry with respect to the other one of the pin tips 102 to break the pin tips 102 apart forming the non-plated substantially flat ends 116 of two pin tips 102.

When the multi-swat apparatus 400 of Figure 13 is assembled in the first manner as described above and as depicted in Figures 15A, 15B and 15C, the second stamping step is performed after the first stamping step; and the fourth stamping step is performed after the third stamping step.

However, the multi-swat apparatus 400 can be assembled in a second manner or configuration such that the second stamping step is performed simultaneously with the first stamping step; and the fourth stamping step is performed simultaneously with the third stamping step.

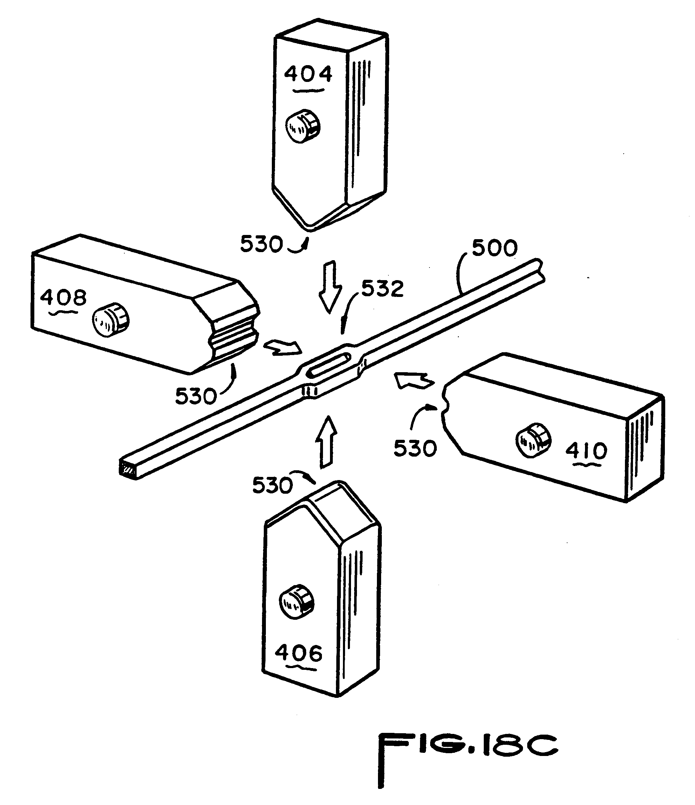

Figures 17A, 17B and 17C are provided to illustrate the multi-swat apparatus 400 assembled in the second manner or configuration and its associated operation. Specifically, the ring 412 has a second set of four of the projections 454. A first one and a fourth one of the second set of the projections 454 are positioned on the ring 412 between the first one of the first set of the ring projections 454 and the fourth one of the first set of the ring projections 454. The first one of the second set of the projections 454 is closer to the first one of the first set of the projections 454 (than the fourth one of the second set of the projections 454) and the fourth one of the second set of the projections 454 is closer to the fourth one of the first set of the projections 454 (than the first one of the second set of the projections 454). A second one and a third one of the second set of the projections 454 are positioned on the ring 412 between the second one of the first set of the ring projections 454 and the third one of the first set of the ring projections 454. The second one of the second set of the projections 454 is closer to the second one of the first set of the projections 454 (than the third one of the second set of the projections 454) and the third one of the second set of the projections 454 is closer to the third one of the first set of the projections 454 (than the second one of the second set of the projections 454). In the second configuration, the second end 472 of the first link 414 is pivotally connected to the first one,of the second set of the ring projections 454, rather than being pivotally connected to the first one of the first set of the ring projections 454. Further, in the second configuration, the second end 476 of the second link 416 is pivotally connected to the second one of the second set of the ring projections 454, rather than being pivotally connected to the second one of the first set of the ring projections 454.

Figure 17A is a front view of the multi-swat apparatus 400 of Figure 13 assembled in the second manner and illustrated in a home position. As in the first configuration, in the home position of the second configuration, the forming tools 404,406,408,410 are positioned mid-way between their closest position to the axis 434 and their farthest position from the axis 434. In the home position, a preplated wire can be positioned in the passage 432 such that the wire extends out of the slots 436,438.

Figure 17B is a front view of the multi-swat apparatus 400 of Figure 13 assembled in the second manner and illustrated in a first forming position. As illustrated in Figure 17B, the ring 412 is oscillated or rotated from the home position in a first direction with respect to the tool guide 402. This causes the first, second third and fourth forming tools 404,406,408,410 to be forced by the links 414,416,418,420 to slide in the first and second slots 436,438 away from the axis 434.

Figure 17C is a front view of the multi-swat apparatus 400 of Figure 13 assembled in the second manner and illustrated in a second forming position. As illustrated in Figure 17B, when the ring 412 is oscillated or rotated from the first forming position or the home position in a second direction (opposite to the first direction) with respect to the tool guide 402, the first, second, third and fourth forming tools 404,406,408,410 are forced by the links 414,416,418,420 to slide in the first and second slots 436,438 towards the axis 434 into contact with sides of the wire (if positioned in the multi-swat apparatus 400).

As seen in Figures 17A, 17B and 17C, longitudinal axes of the first and second links 414,416 are perpendicular or substantially perpendicular to longitudinal axes of the third and fourth links 418,420 in the home position, the first forming position and the second forming position when the the multi-swat apparatus 400 is in the second configuration.

The working ends 452 of the forming tools 404,406,408,410 can be configured to mold any feature in the sides of a wire. Other specific features contemplated include (1) other configurations of pairs of pin tips connected end to end, (2) compliant or press-fit sections for being forced and deformed in a hole in a connector housing or a plated through hole in a printed circuit board providing an interference fit therebetween or (3) a relatively nondeformable retention section for providing an interference fit between a terminal and a connector housing or a plated through hole in a printed circuit board.

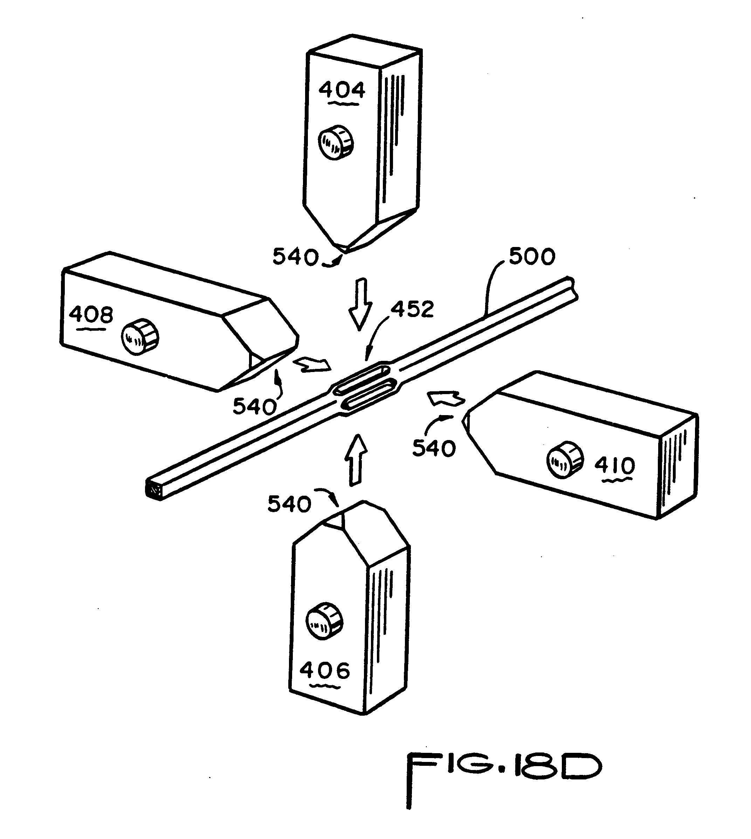

For instance, Figure 18A is an enlarged perspective view of working ends 510 of forming tools 404,406,408,410 configured as molds for forming a pair of the pin tips 202 illustrated in Figures 6-8 connected end to end in a preplated wire 512. Each one of these four working ends 510 can have a concave spherical or cylindrical contact surface spanning more than 90 degrees, and preferably about 100 degrees. This causes the contact surface of adjacent working ends 510 to overlap on the wire 512 when they alternately stamp the sides of the wire 512. When the concave spherical or cylindrical contact surfaces span more than 90 degrees, the multi-swat apparatus 400 must be arranged in the first configuration illustrated in Figures 15A, 15B and 15C where alternating pairs of the four working ends 510 simultaneously swat the wire sides at a time.

Figure 18B is an enlarged perspective view of working ends 520 of forming tools 404,406,408,410 configured as molds for forming a pair of the pin tips 302 illustrated in Figures 9-11 connected end to end in a preplated wire 512. In order to make the pin tips 302 illustrated in Figures 9-11, the multi-swat apparatus 400 should be arranged in the first configuration illustrated in Figures 15A, 15B and 15C where alternating pairs of the four working ends 520 simultaneously swat the wire sides at a time.

Figure 18C is an enlarged perspective view of working ends 530 of forming tools 404,406,408,410 configured as molds for forming a bowtie compliant section 532 in a preplated wire 500. The bowtie compliant or press fit 532 section is described in detail in U.S. Patent 4,274,699 assigned to E. I. du Pont de Nemours and Company, with offices in Wilmington, Delaware. In order to make the bowtie compliant section 532, the multi-swat apparatus 400 can be arranged in the first configuration illustrated in Figures 15A, 15B and 15C where alternating pairs of the four working ends 530 simultaneously swat the wire sides at a time or the second configuration illustrated in Figures 17A, 17B and 17C where all four of the working ends 530 simultaneously swat the wire sides.

Figure 18D is an enlarged perspective view of working ends 540 of forming tools 404,406,408,410 configured as molds for forming a star retention section 452 in a preplated wire 500. The star section 452 is a relatively nondeformable retention section which is commercially available on terminals from E. I. du Pont de Nemours and Company. In order to make the star retention section 552, the multi-swat apparatus 400 should be arranged in the second configuration illustrated in Figures 17A, 17B and 17C where all four of the working ends 540 simultaneously swat the wire sides.

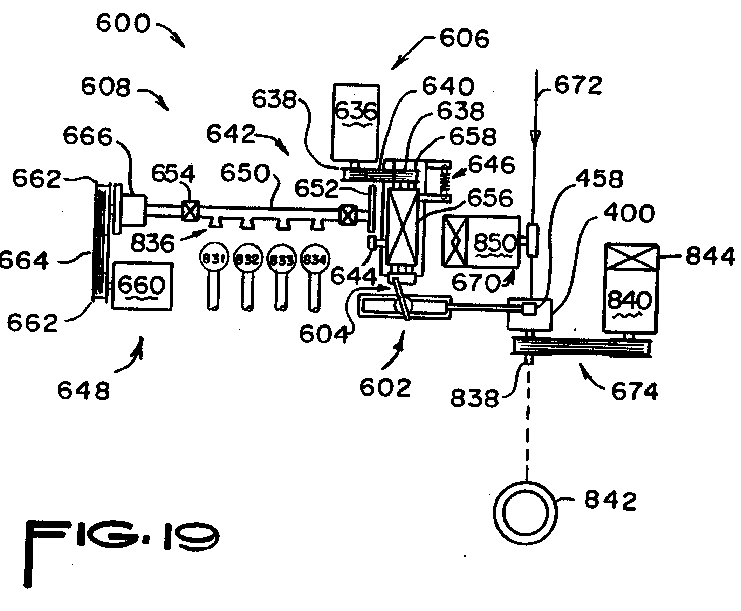

Figure 19 is a schematic illustration of a first embodiment of an automatic variable stroke crank assembly 600 in accordance with the present invention for operating the multi-swat apparatus 400 of Figure 13. More specifically, the automatic variable stroke crank assembly 600 is for connecting to and pivoting or oscillating the extension 458 of the multi-swat apparatus 400. Referring to Figure 19, this first embodiment of the automatic variable stroke crank assembly 600 comprises a spherical bearing assembly 602, a crank assembly 604, rotating means 606, and spherical bearing moving means 608.

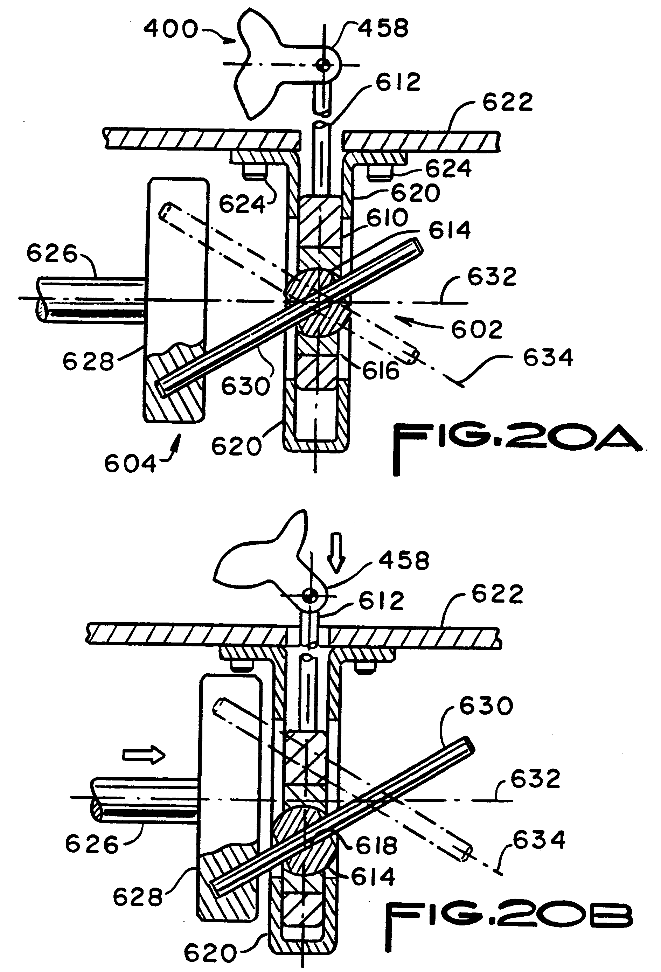

Figures 20A and 20B illustrate a first embodiment of the spherical bearing assembly 602 and the crank assembly 604. Referring to Figures 20A and 20B, the spherical bearing assembly 602 includes a bearing support 610, a bracket or link 612 and a spherical bearing 614. The bracket 612 has a first end connected to the support 610 and a second end connectable to the extension 458 of the multi-swat apparatus 400. The spherical bearing 614 is rotatably mounted in a race 616 in the support 610 and has a passage 618 through its center. In the embodiment illustrated in Figures 20A and 20B, the spherical bearing assembly 602 includes a frame 620 connected to a base 622, such as by screws 624. The frame 620 confines movement of the bearing support such that the bearing support 610 can only move to pivot the link 612 which in turn pivots or oscillates the extension 458.

The crank assembly 604 includes a crank shaft 626, a disk 628 and a pin 630. The crank shaft 626 is rotatable about a crank shaft longitudinal axis 632. The disk 628 is connected in a fixed manner to the crank shaft 626. The pin 630 is connected in a fixed manner to the disk 628 radially spaced from the crank shaft axis 632. The pin 630 passes through the spherical bearing passage 618 and has a pin longitudinal axis 634 which intersects the shaft longitudinal axis 632 at a home position. In other words, the crank shaft axis 632 and the pin axis 634 are non-parallel and intersecting lines. Figure 20A illustrates the spherical bearing assembly 602 and the crank assembly 604 in the home position which is a non-stroke position. In other words, when (1) the bracket second end is connected to the extension 458 of the apparatus 400, (2) the spherical bearing 614 is at the home position and (3) the crank shaft 626 is rotated by the rotating means 606, the bracket 612 does not move or substantially does not move the apparatus 400. In Figures 20A and 20B, the pin 630 has been depicted in phantom lines to indicate the position of the pin 630 after the crank assembly 604 rotates 180 degrees from the position of the pin depicted in solid lines.

The crank shaft rotating means 606 can be any means for rotating the crank shaft 626. Figure 19 illustrates that the rotating means 606 can be a crank AC constant speed motor assembly 636 interconnected to the crank shaft 626 by a pair of pulleys or gears 638 and a belt or chain 640.

The spherical bearing moving means 608 can be any means for moving the spherical bearing 614 along the crank pin 630 from and to the home position. Thus, as illustrated in Figure 20B, when (1) the bracket second end is connected to the extension 458 of the apparatus 400, (2) the spherical bearing 614 is on the pin 630 and spaced from the home position and (3) the crank shaft 626 is rotated by the rotating means 606, the pin 630 rotates the spherical bearing 614 about the shaft longitudinal axis 632 which moves the bracket 612 and pivots or oscillates the extension 458 of the apparatus 400. The farther the spherical bearing 614 is moved on the pin 630 from the home position the longer the stroke of the extension 458 and the deeper the impression made in the sides of the wire by the working ends 452 of the apparatus 400. Thus, Figure 20B illustrates the spherical bearing 614 of the automatic variable stroke crank assembly 600 in one of many variable stroke positions.

Referring back to Figure 19, the moving means 608 comprises a cam assembly 642, a cam follower assembly 644, biasing means 646 and rotating means 648. The cam assembly 642 has a cam shaft 650 rotatable about a longitudinal cam shaft axis and a cam 652 connected to the cam shaft 650. The cam 652 has a cam surface that varies in distance from the cam shaft axis. The cam shaft may be supported by bearing assemblies 654. The cam follower assembly 644 is connected to the crank assembly 604. For instance, the cam follower assembly 644 may comprise a wheel rotatable on a shaft connected to a block 656. The crank shaft 626 passes through and is fixed to the block 656. The block 656 is supported by a bearing assembly 658 to permit linear movement of the block 656 back and forth along the crank shaft axis 632. The biasing means 646 is for biasing the cam follower assembly 644 into contact with the cam surface. The biasing means 646 can be a spring mounted between the linearly moveable block 656 and the stationary bearing assembly 658 or the base 622. The rotating means 648 can be any means for rotating the cam assembly 642. Figure 19 illustrates that the rotating means 648 can be a cam DC motor assembly 660 interconnected to the cam shaft 650 by a pair of pulleys or gears 662 and a belt or chain 664. A clutch assembly 666 may interconnect the cam shaft 650 and the cam motor assembly 660. When the rotating means 648 rotates the cam assembly 642, the cam follower assembly 644 rides on the cam surface thereby pivoting the crank assembly 604 along the crank axis 632 and sliding the spherical bearing 614 back and forth along the pin 630.

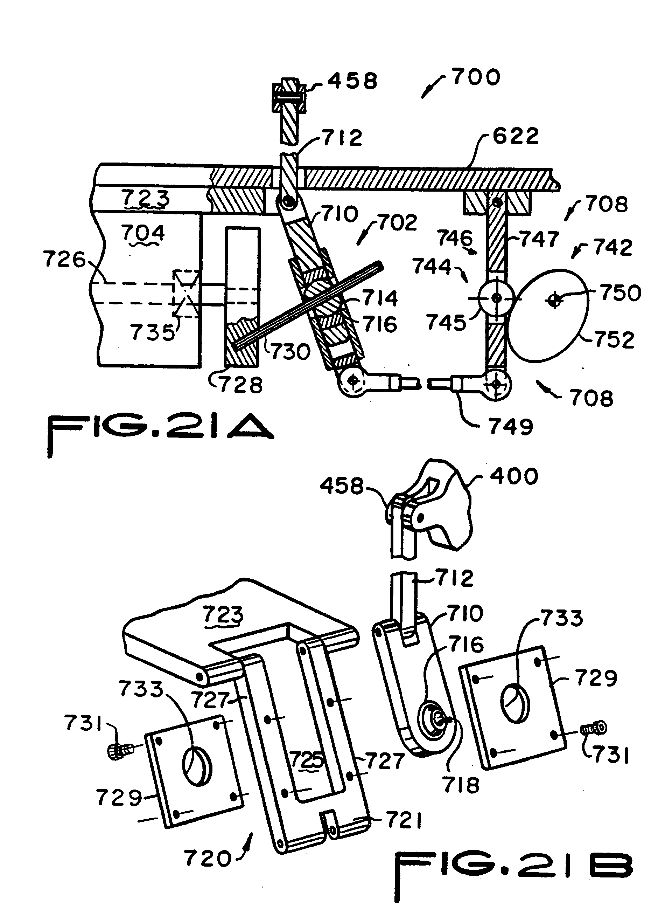

A second embodiment of an automatic variable stroke crank assembly 700 is best illustrated in Figures 21A and 21B. Figure 21A is a schematic illustration of the second embodiment of part of the automatic variable stroke crank assembly 700 illustrated in a non-stroke position. Figure 21B is an enlarged exploded view of the automatic variable stroke crank assembly 700 of Figure 21A. The second automatic variable stroke crank assembly 700 can be the same as the first automatic variable stroke crank assembly 600 with the following exceptions. Referring to Figures 21A and 21B, the second embodiment of the automatic variable stroke crank assembly 700 comprises a spherical bearing assembly 702, a crank assembly 704, rotating means (like rotating means 606), and spherical bearing moving means 708.

The spherical bearing assembly 702 includes a bearing support 710, a bracket or link 712 and a spherical bearing 714. The link 712 has a first end pivotally connected to the support 710 and a second end pivotally connectable to the extension 458 of the multiswat apparatus 400. The spherical bearing 714 is rotatably mounted in a race 716 in the support 710 and has a passage 718 through its center. The spherical bearing assembly 702 includes a frame 720 with a hinge member 721 pivotally connected to a plate 723 connected to the base 622 (or pivotally connected directly to the base 622). The hinge member 721 has a slot 725 between legs 727 for receiving the bearing support 710 and the spherial bearing 714. The frame 720 includes side plates 729 which are connected to the hinge member 721, such as by screws 731 which hold the bearing support 710 and the spherial bearing within the slot 725. The side plates 729 have passages 733.

Like the first crank assembly 604, the crank assembly 704 includes a crank shaft 726, a disk 728 and a pin 730. However, unlike the first crank assembly 604, the crank assembly 704 can not move linearly with respect to the longitudinal axis of the crank shaft 726. The crank shaft 726 can be supported by bearings 735 mounted in a block connected to the plate 723 or the base 622. The pin 730 passes through passage 718 in the spherical bearing 714 and the passages 733 in the side plates 729. The passages 733 are large enough to permit the spherical bearing 714 to slide along the pin 730 when the crank assembly 704 is rotating. When (1) the link second end is connected to the extension 458 of the apparatus 400, (2) the spherical bearing 714 is at the home position (as illustrated in Figure 21A) and (3) the crank shaft 726 is rotated by the rotating means, the link 712 does not move or substantially does not move the apparatus 400. However, when (1) the link second end is connected to the extension 458 of the apparatus 400, (2) the spherical bearing 714 is on the pin 730 and spaced from the home position and (3) the crank shaft 726 is rotated by the rotating means, the pin 730 rotates the spherical bearing 714 about the shaft longitudinal axis which moves the link 712 and pivots or oscillates the extension 458 of the apparatus 400. The farther the spherical bearing 714 is moved on the pin 730 from the home position the longer the stroke of the extension 458 and the deeper the impression made in the sides of the wire by the working ends 452 of the apparatus 400.

Referring to Figure 21A, the moving means 708 comprises a cam assembly 742, a cam follower assembly 744, biasing means 746, and rotating means (not depicted, but similar to the rotating means 648). The cam assembly 742 has a cam shaft 750 rotatable about a longitudinal cam shaft axis. A cam 652 is connected in a fixed manner to the cam shaft 750. The cam 752 has a cam surface rotatable about the cam shaft axis. The cam follower assembly 744 comprises a roller 745 rotatably connected between legs of a second hinge member 747. A first end of the second hinge member 747 is pivotally connected to the base 622. A link 749 is pivotally connected between a second end of the hinge member 747 and a base of the first hinge member 721.

In this embodiment, the biasing means 746 is the second hinge member 747. The weight of the second hinge member 747 causes it to hang as close to vertical as possible. The position of the cam 752 causes the roller 745 to ride on the cam surface pushing the second hinge member 747 to deviate from vertical when the cam 752 is rotated. The second hinge member 747 moves the link 749 which moves the first hinge member 721 and the bearing support 710 which moves the spherical bearing 714 along the pin 730. The greater the distance the spherical bearing 714 is from its home position along the pin 730, the greater the stroke of the link 712 when the crank assembly 704 is rotating.

Referring back to Figure 19, the assembly 600 (or the assembly 700) may futher include (1) feeding means 670 for feeding the elongated metal wire 672 to and through the multi-swat apparatus 400, (2) breaking or twisting means 674 for breaking the wire 672 at the feature formed by the multi-swat apparatus 400, and (3) controlling means 800 for automatically controlling the rotating means 606, the moving means 608, the feeding means 670, and the breaking means 674.

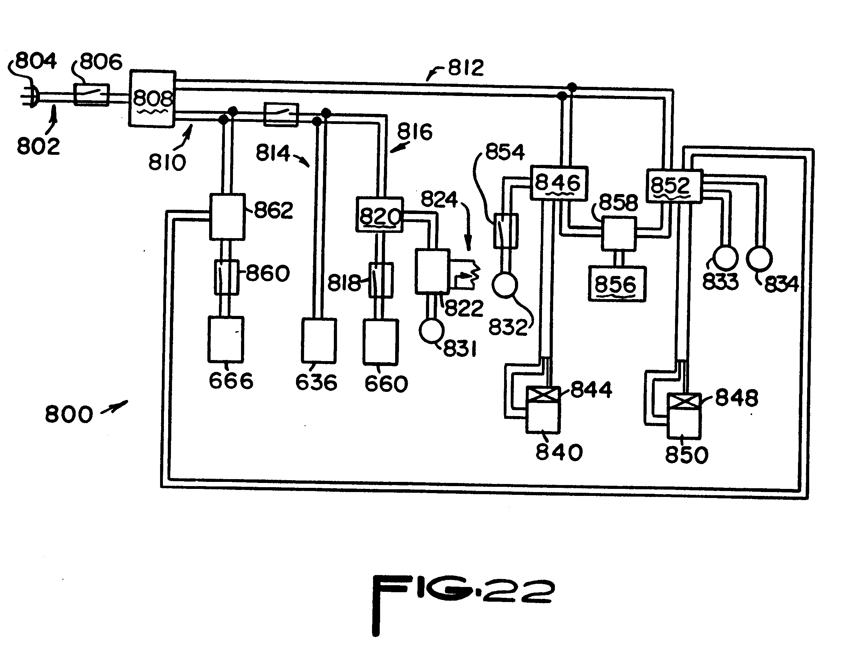

Figure 22 is a schematic illustration of the control system or controlling means 800 for the automatic variable stroke crank assembly 600 of Figure 19. The control system 800 includes a power cable or lines 802 with a plug 804 for plugging into a standard 115 or 230 Volt power supply. A master switch 806 can be provided in the power cable or lines 802 controllable by a key to turn power on and off throughout the assembly 600. A transformer 808 can be connected to the cable or lines 802 in order to provide 115 Volts through a first output cable 810 connected to the transformer 808 and 230 Volts through a second output cable 812 connected to the transformer 808.

The crank AC motor assembly 636 is directly connected by lines 814 to the first output cable 810.

The cam DC motor assembly 660 is connected in series by lines 816 with a switch 818, a motor controller 820 and the first output cable 810. The motor controller 820 is also connected by lines to a tachometer 822 with a variable potentiometer 824. A first proximity switch 831 is connected to the tachometer 822 by lines and is positioned to sense a first one of a plurality of timing pins 836 extending from the cam shaft 650. The motor controller 820 is for converting alternating current to direct current and for maintaining the speed of the cam DC variable speed motor assembly 660 to that set on the potentiometer 824.

Referring to Figure 19, assuming that the wire 672 has a square cross section, the breaking means 674 may comprise a block or tube 838 having a passage with a square cross section through the block or tube 838 for receiving the wire 672. The block or tube 838 is rotatable about the passage. A twist-off servo motor 840 can be connected by pulleys or gears and a belt or chain to the block to rotate the block or tube 838. Twisting the block or tube 838 twists or rotates the wire portion or pin in the block or tube 838 breaking it off from the rest of the wire 672. A container 842 can be positioned to receive pins pushed out of the breaking means 674.

Referring to Figure 22, an encoder 844 can be connected to the twist-off servo motor 840. Both the encoder 844 and the twist-off servo motor 840 can be connected by lines to a motor controller 846 which in turn is connected by lines to the second ouput cable 812. A second proximity switch 832 is connected to the motor controller 846 by lines and is positioned to sense a second one of a plurality of timing pins 836 extending from the cam shaft 650. When the second proximity switch 832 senses the second one of the timing pins, it generates a signal which causes the motor controller 846 to energize the twist-off motor 840 to twist a preset angle. A switch 854 can be in the lines between the second proximity switch 832 and the motor controller 846. Switch 854 effectively turns the breaking means 674 on and off. When the breaking means 674 is turned off, the wire 672 swaged by the apparatus 400 can be wound on a reel instead of broken into wire portions or pins and stored in containers, like container 842.

Referring to Figure 19, the feeding means 670 may comprise a pair of rollers in contact with and on either side of the wire 672. One or both of the rollers are driven by a feed wire servo motor 850. Referring to Figure 22, an encoder 848 can be connected to the feed wire servo motor 850. Both the encoder 848 and the feed wire servo motor 850 can be connected by lines to a motor controller 852 which in turn is connected by lines to the second ouput cable 812. A suitable motor controller referred to as DS 100 Controllers that can be used for the motor controllers 846 and 852 are commercially available from Giddings & Lewis Company with offices in Fond du Lac, WI under part number 40134201 with positioning card no. 40134200-30. A third and a fourth proximity switch 833 and 834 are connected to the motor controller 852 by lines and are positioned to sense a third and a fourth one of a plurality of timing pins 836, respectively, extending from the cam shaft 650. When the third proximity switch 833 senses the third one of the timing pins, it generates a signal which causes the motor controller 852 to energize the wire feed motor 840 to feed the wire 672 in a forward direction into or towards the multi-swat apparatus 400 a predetermined distance. When the fourth proximity switch 834 senses the fourth one of the timing pins, it generates a signal which causes the motor controller 852 to energize the wire feed motor 840 to move the wire 672 in a backwards direction away from the multi-swat apparatus 400 a predetermined distance.

A keyboard 856 can be connected through a switch 858 to permit programming of the motor controller 846 and the motor controller 852. The keyboard 856 allows an operator to select parameters, such as motor speeds and wire length between features formed by the multi-swat apparatus 400. An illustrative keyboard, referred to as a Microterm Programmer, that can be used in the present invention is also available from Giddings & Lewis Company under Model number 502-03648-00.

The clutch assembly 666 can be connected by lines through a switch 860 to a variable counter 862 which in turn is connected to the first ouput cable 810. The variable counter 862 is also connected by lines to the motor controller 852. The motor controller 852 sends a signal to the counter 862 each time the wire feed motor 850 is energized in the forward direction. The counter counts the signals from the motor controller 852. When the count determined by the counter 862 reaches a preset number, the counter 862 disengages the clutch assembly 666 deactivating the multiswat apparatus 400. An illustrative counter that can be used in the present invention is referred to as a Multifunction Controller and is commercially available from Electric Counters & Controls, Inc., of Mundelein, Illinois under model number NWB 136.

Those skilled in the art, having the benefit of the teachings of the present invention as hereinabove set forth, can effect numerous modifications thereto. These modifications are to be construed as being encompassed within the scope of the present invention as set forth in the appended claims.

## Claims

1. A variable stroke crank assembly (600,700) for pivoting or oscillating an apparatus (400), the assembly comprising:

a spherical bearing assembly (602,702) including a bearing support (610,710), a link (612,712) having a first end connected to the support and a second end connectable to the apparatus, a spherical bearing (614,714) rotatably mounted in the support, the spherical bearing having a passage (618,718);

a crank assembly (604,704) including a crank shaft (626,726) rotatable about a crank shaft longitudinal axis (632), a disk (628,728) connected to the crank shaft and a pin (630,730) connected to the disk radially spaced from the crank shaft axis, the pin passing through the spherical bearing passage and having a pin longitudinal axis (634) which intersects the shaft longitudinal axis at a home position;

means (606) for rotating the crank shaft; and

means (608,708) for moving the spherical bearing along the crank pin from and to the home position,

whereby when the link second end is connected to the apparatus, the spherical bearing is at the home position and the crank shaft is rotated, the link does not or substantially does not move the apparatus, and when the link second end is connected to the apparatus, the spherical bearing is on the pin and spaced from the home position and the crank shaft is rotated, the pin rotates the spherical bearing about the shaft longitudinal axis which moves the link and pivots or oscillates the apparatus.

2. A variable stroke crank assembly according to claim 1, wherein the moving means (608) comprises:

a cam assembly (642) having a cam shaft (650) rotatable about a longitudinal cam shaft axis and a cam (652) connected to the cam shaft, the cam having a cam surface that varies in distance from the can shaft axis;

a cam follower assembly (644) connected to the crank assembly;

means (646) for biasing the cam follower assembly into contact with the cam surface; and

means (648) for rotating the cam assembly,

whereby when the cam rotating means rotates the cam assembly, the cam follower assembly is pivoted by the cam surface thereby pivoting the crank assembly and sliding the spherical bearing back and forth along the pin.

3. A variable stroke crank assembly according to claim 2, wherein the can follower assembly further comprises:

a block (656) connected to the crank shaft in a fixed manner;

a bearing assembly (658) supporting the block permitting linear movement of the block back and forth along the crank shaft axis; and

a wheel rotatably mounted on the block and positioned to contact and ride on the cam surface.

4. A variable stroke cam assembly according to claim 1, wherein the moving means comprises:

a cam assembly (742) having a cam shaft (750) rotatable about a longitudinal cam shaft axis and a cam (652) connected to the can shaft, the cam having a cam surface that varies in distance form the cam shaft axis;

a base (622);

a cam follower assembly (744) pivotally connected between the base and the spherical bearing assembly;

means (746) for biasing the cam follower assembly into contact with the cam surface; and

means for rotating the can assembly,

whereby when the can rotating means rotates the cam assembly, the cam follower assembly is pivoted by the cam surface thereby pivoting the spherical bearing assembly and sliding the spherical bearing back and forth along the pin.

5. The variable stroke crank assembly of claim 4, wherein the biasing means (746) comprises:

a hinge member (747) having a first end and a second end, the first end being pivotally connected to the base;

and wherein the cam follower assembly comprises:

a roller (745) rotatably mounted on the hinge member (747) and positioned to contact and ride on the cam surface ; and

a link (749) pivotally connected between the second end of the hinge member and the spherical bearing assembly.

6. An apparatus for forming a feature on an elongated metal wire;

means for feeding the elongated metal wire to and through the apparatus;

a variable stroke crank assembly according to any one of claims 1 to 5 for operating the apparatus, and

means (800) for automatically controlling the rotating means, the moving means and the feeding means,

whereby the apparatus forms the feature on the elongated metal wire at various locations along the wire.

7. Apparatus according to claim 6 and further comprising:

means (674) for breaking the wire at the formed feature; and wherein the controlling means (800) also automatically controls the breaking means.

8. Apparatus according to claim 6 or 7 and further comprising:

a tool guide (402) having a first surface (428), a second surface (430) and a passage (432), the first surface being cylindrical about an axis, the second surface being connected to one end of the cylindrical surface, the second surface having a first straight slot (436) and a second straight slot (438) recessed in the second surface and intersecting one another at the axis, the passage (432) extending through the tool guide along the axis;

a first forming tool (404) and a second forming tool (406) pivotally or slidably received in the first slot across the axis from one another;

a third forming tool (408) and a fourth forming tool (410) pivotally or slidably received in the second slot across the axis from one another;

each one of the first, second, third and fourth forming tools having a projection (450) and a working end (452) for contacting the wire and conforming the contacted wire to the shape of the working end;

a ring (412) having a plurality of projections (454) and an inner cylindrical surface (456) for contacting the tool guide cylindrical surface, the variable stroke crank assembly serving to oscillate the ring around the axis with respect to the tool guide;

a first link (414) having a first end (470) and a second end (472), the first end being pivotally connected to the first tool projection (450) and the second end being pivotally connected to a first one of a first set of the ring projections (454);

a second link (416) having the first end (474) and a second end (476), the first end (474) being pivotally connected to the second tool projection (450) and the second end (476) being pivotally connected to a second one of the first set of the ring projections (454);

a third link (418) having a first end (478) and a second end (480), the first end (478) being pivotally connected to a third one of the first set of the ring projections (454);

a fourth link (420) having a first end (482) and a second end (484), the first end (482) being pivotally connected to the fourth one of the first set of the ring projections (454);

whereby when the wire is positioned in the passage and extends out of the slots and the ring is oscillated in a first direction with respect to the tool guide, the first and second forming tools are forced by the links to slide in the first slot towards the axis into contact with the wire and the third and fourth forming tools are forced by the links to slide in the second slot away from the axis and when the ring is oscillated in a second direction with respect to the tool guide, the third and fourth forming tools are forced by the links to slide in the second slot towards the axis into contact with the wire and the first and second forming tools are forced by the links to slide in the first slot away from the axis.

9. Apparatus according to claim 8, wherein the working ends of the tools are configured as a mold for forming a pair of pin tips (102 102', 202 202', 302 302'), connected end to end, each one of the pin tips comprising:

an electrically conductive layer (110,210,310); and

an electrically conductive core (108,208,308) with an axis of symmetry (107,207,307), the core having:

a non-plated substantially flat end (116,216,316) having at least one edge (118,218,318), the non-plated substantially flat ends of the pin tips being connected together; and

at least one curved side (112,212,312) substantially plated with the conductive layer, the or each side extending from the flat edge or a corresponding one of the flat end edges, away from the axis of symmetry.

10. Apparatus according to claim 8, wherein the working ends of the tools are configured as a mold for forming a compliant section or a retention section.

FIG. 1

PRIOR ART

FIG. 2

PRIOR ART

FIG.3

FIG.4

FIG.5

FIG.6

FIG.7

FIG. 8

FIG.9

FIG.10

FIG.11

FIG. 12

FIG.13

FIG.14

EP 0 510 980 A2

FIG.15A

436

414

412

418

402

404

438

438

408

410

420

406

416

436

FIG. 15B

FIG. 15C

FIG.16A

FIG.16B

FIG.16C

FIG.16D

FIG.16E

102

104

102

104

102

104

104

FIG.16F

102

116

102

FIG.16G

FIG.17A

FIG.17B

FIG.17C

FIG.18A

FIG. 18B

FIG.18C

FIG. 18D

FIG. 19

EP 0 510 980 A2

FIG.20A

FIG.20B

40

FIG.21A

FIG.21B

FIG.22